# EUROPEAN PATENT SPECIFICATION

(11) **EP 3 012 070 B1**
(45) Date of publication and mention of the grant of the patent: **24.04.2019**
(21) Application number: 14814443.9
(22) Date of filing: 25.03.2014
(51) Int. Cl.: B25B 5/02, B25B 7/12, F16B 2/08, F16C 1/00, F16C 1/14, B25B 5/06, B25B 5/08, B25B 5/16, B25B 7/14, B25B 7/18, F16H 37/12

(54) **WORK APPARATUS**
ARBEITSVORRICHTUNG
DISPOSITIF DE TRAVAIL

(30) Priority: 21.06.2013 JP 2013130960
(43) Date of publication of application: 27.04.2016
(73) Proprietor: Nashimoto Industries Co. Ltd., Niigata 955-0814 (JP)
(72) Inventor: NASHIMOTO Toshiharu, Sanjo-shi Niigata 955-0814 (JP)
(74) Representative: Hoffmann Eitle
(86) International application number: PCT/JP2014/058199
(87) International publication number: WO 2014/203578

(56) References cited:
- WO-A1-2012/053123
- JP-A- H10 277 960
- JP-A- 2005 187 073
- JP-U- 3 177 360
- JP-U- H0 583 414
- US-A- 409 295
- US-A- 5 893 307
- US-A- 6 113 085
- US-A1- 2007 107 167
- US-A1- 2012 291 293

## Description

### TECHNICAL FIELD

The present invention relates to a work apparatus having a work part that is operated by applying force to move a first member or a second member, and transmitting the force to carry out prescribed work.

### BACKGROUND ART

The applicant previously proposed an open-close work implement, disclosed in Patent No. 4995961 (Patent Document 1).

In the open-close work implement disclosed in Patent Document 1, a pair of members composed of a first half member and a second half member are superimposed in intersecting fashion and pivotably attached partway therealong, with the opposed distal ends of the first half member and second half member functioning as an open-close work part which serves as a holding part or cutting part, and the opposed basal ends of the first half member and second half member functioning as an open-close operation part which, through application of closing force to press the ends inwardly towards one another in a closing direction, closes the open-close work part of the distal ends in order to hold or cut an object; the apparatus being configured such that, when additional closing force is applied to the open-close operation part while the distal end of the first half member and the distal end of the second half member which constitute the open-close work part are holding the object, at least the basal end of the first half member or the basal end of the second half member flexes inwardly in response to the increasing closing force; and the open-close operation part being provided with a contact part that is mobilized by this flexing and a receiving part with which the contact part comes into contact, which parts are disposed in opposition to one another, the contact part being adapted to flexibly mobilize closer towards the receiving part due to the increasing closing force, and when the closing force has reached a prescribed value, to come into contact against the receiving part, whereupon, even in the event that the closing force applied to the open-close operation part continues to increase further, while a portion to the basal end side of contact part flexes further or is mobilized inwardly in response to increase in the closing force, the increased closing force is not transmitted to the open-close operation part, so that the holding force holding the object or the cutting force cutting the object does not exceed the peak value of holding force or cutting force produced in response to the closing force that was being applied to the open-close operation part when the receiving part and the contact part came into contact; whereby when holding or cutting an object of delicate structure which it is desired not to crush, damage, or scratch the surface as a result of the holding operation, the operator, without the need to cautiously operate the open-close operation part while adjusting the closing force applied thereto by slightly increasing or decreasing the force, can easily hold or cut the object, for example, by an exceedingly simple operation that involves simply gripping or squeezing the open-close operation part with the fingertips, without crushing, damaging, or scratching the surface of the object.

### [Prior Art Documents]

### [Patent Documents]

[Patent Document 1] Japanese Patent JP 4995961 B1

### DISCLOSURE OF THE INVENTION

### Problem the Invention is Intended to Solve

A problem encountered with the open-close work implement of Patent Document 1 is that, when the size or thickness of a object being held or cut varies, the gap between the contact part and the receiving part changes, the amount of flex experienced by the open-close operation part before the contact part comes into contact against the receiving part changes, and the maximum value (peak value) of holding force or cutting force changes, thereby imposing limits as to the objects that can be worked.

As the result of repeated day-to-day research and development efforts directed to solving the above problem, as well as to expanding application of the features of the innovative invention of Patent Document 1 beyond open-close work implements for holding and cutting operations, into various other applications such as pressing, tightening, stirring, and the like, the inventors developed an unprecedented, innovative work apparatus with which prescribed work can be carried out without producing force in excess of a given value, and without change in the maximum value (peak value) of force, such as holding force or cutting force, that acts on the object during work irrespective of variation in the size or thickness of the object being worked on, and moreover with which applications besides holding and cutting, such as pressing, tightening, stirring, and the like, can be realized.

### Means for Solving the Problem

The main point of the present invention will be described with reference to the accompanying drawings.

A first aspect of the present invention relates to a work apparatus provided with a first member 1 and a second member 2, and additionally provided with a work part 3 to which at least one of the members is movably provided, the first member 1 or the second member 2 moving due to an applied force, and the transmitting of a force causing the work part to operate and carry out prescribed work, wherein the work apparatus is characterized in that either the first member 1 or the second member 2 is furnished with a mobilization part 4 and with a mobilized contact part 5 adapted to be mobilized by deformation of the mobilization part 4, while the other member is furnished with a contact receiving part 6 contacted by this mobilized contact part 5, the mobilized contact part 5 being adapted to undergo relative motion with respect to the contact receiving part 6 without moving closer to the contact receiving part 6, or to move in the same direction as the contact receiving part 6 while maintaining a constant distance therefrom, until operating resistance arises in the work part 3; when operating resistance arises in the work part 3, in the case of moving relatively with respect to the contact receiving part 6, to be mobilized in a direction different from the direction of relative motion and move closer to the contact receiving part 6 due to deformation of the mobilization part 4, or in the case of moving in the same direction as the contact receiving part 6 while maintaining equal distance therefrom, to narrow the distance from the contact receiving part 6 and move closer to the contact receiving part 6 due to deformation of the mobilization part 4, and when the operating resistance of the work part 3 reaches a prescribed value, to come into contact against the contact receiving part 6; and in this state of contact of the mobilized contact part 5 against the contact receiving part 6, force further applied to the moveable first member 1 or the second member 2 after the mobilized contact part 5 has come into contact against the contact receiving part 6 is not transmitted to the work part 3, or when force is further applied to the moveable first member 1 or the second member 2 after the mobilized contact part 5 has come into contact against the contact receiving part 6, the transmission ratio at which the applied force is transmitted to the work part 3 is lower than the transmission ratio before the mobilized contact part 5 has come into contact against the contact receiving part 6.

Another aspect of the present invention relates to the work apparatus according to the first aspect, characterized in that the mobilization part 4 comprises an elastic body; when the operating resistance of the work part 3 reaches a prescribed value, the mobilization part 4 elastically deforms by a prescribed amount and the mobilized contact part 5 comes into contact against the contact receiving part 6; and in this state of contact of the mobilized contact part 5 against the contact receiving part 6, when the operating resistance of the work part 3 is lower than the prescribed value, the mobilized contact part 5 retreats from the contact receiving part 6 due to elastic recovery of the mobilization part 4.

Another aspect of the present invention relates to the work apparatus according to any of the first or second aspect, characterized in that a contact surface 6A of the contact receiving part 6 contacted by the mobilized contact part 5, or a contact surface 5A of the mobilized contact part 5 contacting the contact receiving part 6, extends in the direction of motion of the moveable first member 1 or the second member 2; until operating resistance arises in the work part 3, the mobilized contact part 5 undergoes relative motion along the contact surface 6A of the contact receiving part 6, or the contact receiving part 6 undergoes relative motion along the contact surface 5A of the mobilized contact part 5; and when operating resistance arises in the work part 3, the mobilized contact part 5 halts relative motion, and, becoming mobilized in a direction different from the relative motion direction, moves closer towards the contact receiving part 6, or the mobilized contact part 5, while undergoing the relative motion, becomes mobilized in a direction different from this relative motion direction and moves closer towards the contact receiving part 6.

Another aspect of the present invention relates to the work apparatus according to any of the first to third aspects, characterized in that a plurality of recesses or protrusions are arrayed on the contact surface 6A of the contact receiving part 6 in the lengthwise direction of the contact surface 6A, and the mobilized contact part 5 is furnished with protrusions or recesses adapted to mate with the recesses or protrusions that are furnished to the contact surface 6A of the contact receiving part 6; or a plurality of recesses or protrusions are arrayed in the lengthwise direction of the contact surface 5A on the contact surface 5A of the mobilized contact part 5, and the contact receiving part 6 is furnished with protrusions or recesses adapted to mate with the recesses or protrusions that are furnished to the contact surface 5A of the mobilized contact part 5; and when the mobilized contact part 5 comes into contact against the contact receiving part 6, the recesses or protrusions of the mobilized contact part 5 mate with those of the contact receiving part 6 to bring about a locked state with respect to the contact receiving part 6.

Another aspect of the present invention relates to the work apparatus according to any of the first to fourth aspects, characterized in that the contact surface 6A of the contact receiving part 6 is furnished with an elastic synthetic resin or rubber, so that the mobilized contact part 5 comes into contact against the elastic synthetic resin or rubber, or the contact surface 5A of the mobilized contact part 5 is furnished with an elastic synthetic resin or rubber, so that the contact receiving part 6 comes into contact against the elastic synthetic resin or rubber; and when the mobilized contact part 5 comes into contact against the contact receiving part 6, friction is generated between the mobilized contact part 5 and the contact receiving part 6, and the transmission ratio at which force further applied after the mobilized contact part 5 has come into contact against the contact receiving part 6 is transmitted to the work part 3 is lower than the transmission ratio before the mobilized contact part 5 came into contact against the contact receiving part 6.

Another aspect of the present invention relates to the work apparatus according to any of the first to fifth aspects, characterized in that while the mobilized contact part 5 is moving closer and coming into contact against the contact receiving part 6 due to deformation of the mobilization part 4, in the event that the contact position of the mobilized contact part 5 against the contact surface 6A of the contact receiving part 6 changes, or the contact position of the contact surface 5A of the mobilized contact part 5 against the contact receiving part 6 changes, the amount of deformation of the mobilization part 4 until the mobilized contact part 5 comes into contact against the contact receiving part 6 remains unchanged.

Another aspect of the present invention relates to the work apparatus according to any of the first to sixth aspects, characterized in that when operating resistance arises in the work part 3, the mobilized contact part 5, due to deformation of the mobilization part 4, moves closer towards the contact receiving part 6 which is positioned in a substantially orthogonal direction with respect to the relative motion direction.

Another aspect of the present invention relates to the work apparatus according to any of the first to seventh aspects, characterized by comprising a lock mechanism for maintaining the mobilized contact part 5 in a state of contact against the contact receiving part 6, the lock mechanism being adapted to maintain contact of the mobilized contact part 5 against the contact receiving part 6 even when force no longer continues to be applied after the mobilized contact part 5 has come into contact against the contact receiving part 6, and to maintain a constant state of force exerted by the work part 3.

Another aspect of the present invention relates to the work apparatus according to any of the first to eighth aspects, characterized by comprising a mobilization part deformation-inhibiting mechanism for inhibiting deformation of the mobilization part 4, operation of the mobilization part deformation-inhibiting mechanism preventing the mobilization part 4 from deforming, even when operating resistance arises in the work part 3.

### Effect Of The Invention

Due to the configurations set forth above, the present invention provides an unprecedented, innovative work apparatus with which prescribed work can be carried out without applying force exceeding a prescribed value to objects on which prescribed work is being carried out, even when force sufficiently great to cause the work part to exert force in excess of a prescribed value is casually applied to the moveable first member or the second member, or both; or with which prescribed work can continue to be carried out under prescribed force (constant force) on a object on which prescribed work is being carried out, simply by casually applying to the moveable first member or the second member, or both, force sufficiently great to cause the work part to exert force at or above a prescribed value; or with which force can be applied delicately in small increments without suddenly subjecting the object to great force, even in the event that a force sufficiently great to cause the work part to exert force exceeding a prescribed value has been casually applied to the moveable first member or the second member, or both.

Moreover, because the direction in which the mobilized contact part moves closer towards the contact receiving part is a different direction than the direction of relative motion of the mobilized contact part with respect to the contact receiving part, the present invention provides an exceedingly practical and eminently innovative work apparatus with which it is possible to easily realize a design whereby the maximum value of the force exerted by the work part on a target article targeted for prescribed work remains constant even when the size or thickness of the object varies, or a design whereby the maximum value of the force exerted by the work part on a object changes depending on the size or thickness of the object.

Additionally, the present invention provides an unprecedented, innovative work apparatus that is not limited to holding or cutting work as in the prior art examples, and that is applicable to work apparatus for carrying out work of various kinds, for example, diameter expansion, pressing, tightening, stirring, and the like.

### BRIEF DESCRIPTION OF THE DRAWINGS

FIG. 1 is an illustrative perspective view showing Example 1;
FIG. 2 is an operation illustration diagram of before operation resistance arises in the work part of Example 1;
FIG. 3 is an operation illustration diagram of after operation resistance arises in the work part of Example 1;
FIG. 4 is an illustrative front view showing Example 2;
FIG. 5 is an enlarged illustrative cross sectional view showing a contact receiving part of Example 3;
FIG. 6 is an illustrative diagram showing a state prior to operation of a lock mechanism of Example 4;
FIG. 7 is an illustrative diagram showing a state subsequent to operation of the lock mechanism of Example 4;
FIG. 8 is a front view showing a state prior to operation resistance arising in a work part of Example 5;
FIG. 9 is an illustrative front view showing a state in which operation resistance has arisen in the work part of Example 5, and the mobilized contact part has contacted the contact receiving part;
FIG. 10 is an illustrative front view showing a state in which the operation resistance of the work part has increased further from the state of FIG. 9;
FIG. 11 is a perspective view showing Example 6;
FIG. 12 is an operation illustration diagram of before operation resistance arises in the work part of Example 6;
FIG. 13 is an operation illustration diagram of after operation resistance arises in the work part of Example 6;
FIG. 14 is an illustrative front view showing Example 7;
FIG. 15 is a front view showing a state prior to operation resistance arising in a work part of Example 8;
FIG. 16 is an illustrative front view showing a state in which operation resistance has arisen in the work part of Example 8, and the mobilized contact part has contacted the contact receiving part;
FIG. 17 is an enlarged cross sectional view showing a lock mechanism of Example 8;
FIG. 18 is an enlarged cross sectional view showing a lock mecanism of Example 8;
FIG. 19 is a front view showing Example 9;
FIG. 20 is an operation illustration diagram of Example 9;
FIG. 21 is an enlarged illustrative cross sectional view showing a lock mechanism of Example 9;
FIG. 22 is a front view showing Example 10;
FIG. 23 is an illustrative front view showing Example 11;
FIG. 24 is an illustrative diagram showing a mobilization part deformation-inhibiting mechanism of Example 12;
FIG. 25 is an enlarged illustrative diagram showing a mobilization part of Example 13;
FIG. 26 is an enlarged illustrative diagram showing another example of the mobilization part of Example 13;
FIG. 27 is a partial cut-away illustrative perspective view showing Example 14;
FIG. 28 is an illustrative plan view showing a state prior to operation resistance arising in a work part of Example 14;
FIG. 29 is an illustrative plan view showing a state in which operation resistance has arisen in the work part of Example 14, and the mobilized contact part has contacted the contact receiving part;
FIG. 30 is a perspective view showing Example 15;
FIG. 31 is an enlarged illustrative cross sectional view showing a state prior to operation resistance arising in a work part of Example 15;
FIG. 32 is an illustrative diagram showing usage of Example 15;
FIG. 33 is an enlarged illustrative cross sectional view showing a state in which operation resistance has arisen in the work part of Example 15, and the mobilized contact part has contacted the contact receiving part;
FIG. 34 is an illustrative perspective view showing Example 16;
FIG. 35 is an illustrative exploded perspective view showing Example 16;
FIG. 36 is an enlarged illustrative diagram showing a state prior to operation resistance arising in a work part of Example 16;
FIG. 37 is an enlarged illustrative diagram showing a state in which operation resistance has arisen in the work part of Example 16, and the mobilized contact part has contacted the contact receiving part;
FIG. 38 is an illustrative perspective view showing Example 17;
FIG. 39 is an illustrative exploded perspective view showing Example 17;
FIG. 40 is an enlarged illustrative diagram showing a state prior to suction resistance reaching a prescribed value in Example 17;
FIG. 41 is an enlarged illustrative diagram showing a state after suction resistance has reached a prescribed value, and the mobilized contact part has contacted the contact receiving part in Example 17;
FIG. 42 is an illustrative perspective view showing Example 18;
FIG. 43 is an enlarged illustrative diagram showing a state prior to operation resistance arising in a work part of Example 18;
FIG. 44 is an enlarged illustrative diagram showing a state in which operation resistance has arisen in the work part of Example 18, and the mobilized contact part has contacted the contact receiving part;
FIG. 45 is a perspective view showing Example 19;
FIG. 46 is an illustrative diagram showing a state prior to operation resistance arising in a work part of Example 19;
FIG. 47 is an illustrative diagram showing a state in which operation resistance has arisen in the work part of Example 19, and the mobilized contact part has contacted the contact receiving part; and
FIG. 48 is a perspective view of another example of Example 19.

### BEST MODE FOR CARRYING OUT THE INVENTION

The preferred embodiments of the present invention shall be described briefly on the basis of the drawings, to show the operation of the present invention.

The present invention can be configured such that a work part 3 operates through relative motion of a first member 1 and a second member 2, or the work part 3 operates through motion of the first member 1 and the second member 2 in the same direction while maintaining a constant distance.

In the case of the configuration in which the work part 3 is operated by relative motion of the first member 1 and the second member 2, when force is applied to one or both of the moveable first member 1 and second member 2, the first member 1 and second member 2 experience relative motion, force applied by the relative motion of the first member 1 and the second member 2 is transmitted and operates the work part 3, and until operating resistance arises in the operated work part 3, a mobilized contact part 5 which has been provided to either the first member 1 or the second member 2, and a contact receiving part 6 which has been provided to the other, experience relative motion in association with the relative motion of the first member 1 and the second member 2.

The amount of motion during this relative motion of the first member 1 and the second member 2 will vary depending on the size, thickness, and the like of an object 7 on which prescribed work is carried out by the work part 3. Therefore, the amount of relative motion of the mobilized contact part 5 with respect to the contact receiving part 6 will vary as well.

When operating resistance arises in the operated work part 3, a mobilization part 4 which, together with the mobilized contact part 5, has been furnished to either the first member 1 or the second member 2, experiences deformation, and due to this deformation of the mobilization part 4, the mobilized contact part 5 is mobilized in a direction closer to the contact receiving part 6.

In the present invention, operating resistance of the work part 3 refers to force exerted on the object 7 by the work part 3. In a case in which, for example, the present invention is configured as a holding apparatus, it refers to the holding force with which the work part 3 holds the object 7, or in a case in which, for example, the present invention is configured as a pressing apparatus, it refers to the pressing force at which the work part 3 presses the object 7; otherwise, in the case of a cutting apparatus configuration it refers to cutting force, in the case of a diameter expansion apparatus configuration to expansion force, in the case of a tightening apparatus configuration to tightening force, or in the case of a stirring apparatus configuration to stirring force.

When the mobilized contact part 5 is mobilized closer towards the contact receiving part 6, the mobilized contact part 5 is mobilized in a different direction from the direction of motion prior to operating resistance arising in the work part 3, and moves closer towards the contact receiving part 6; as the operating resistance of the work part 3 continues to increase further, the amount of deformation of the mobilization part 4 increases, and the mobilized contact part 5 moves still closer towards the contact receiving part 6; and when the operating resistance of the work part 3 reaches a prescribed value, the mobilized contact part 5 comes into contact against the contact receiving part 6.

Once the mobilized contact part 5 has come into contact against the contact receiving part 6, even when force is further applied to the moveable first member 1 or the second member 2, or both, the applied force is not transmitted to the work part 3; or when force is further applied to the moveable first member 1 or the second member 2, or both, the transmission ratio at which the applied force is transmitted to the work part 3 is lower as compared with the transmission ratio prior to contact of the mobilized contact part 5 against the contact receiving part 6.

For example, a configuration whereby when force is further applied to the moveable first member 1 or the second member 2, or both, the applied force is not transmitted to the work part 3 affords an unprecedented, exceedingly practical and eminently innovative work apparatus in which, even in the event that subsequent to the mobilized contact part 5 having come into contact against the contact receiving part 6, force is further applied to the moveable first member 1 or the second member 2, or both, the operating resistance of the work part 3 nevertheless will not rise above a prescribed value; in other words, in the event that, subsequent to the mobilized contact part 5 having come into contact against the contact receiving part 6, force is further applied to the moveable first member 1 or the second member 2, or both, the applied force will not be transmitted to the work part 3, and the force exerted by the work part 3 on the object 7, e.g., holding force, cutting force, expansion force, pressing force, tightening force, stirring force, or the like, will not rise above a prescribed value, whereby even when force sufficiently great to cause the work part 3 of the moveable first member 1 or the second member 2, or both, to exert force exceeding a prescribed value is casually applied, prescribed work can be carried out without applying force exceeding the prescribed value to the object 7 on which the prescribed work is being performed; or the prescribed work can continue to be carried out at a prescribed value (constant force) on the object 7 on which the work is being carried out, simply by casually applying to the moveable first member 1 or the second member 2, or both, a force sufficiently great to cause the work part 3 to exert force exceeding a prescribed value.

Moreover, a configuration whereby when force is further applied to the moveable first member 1 or the second member 2, or both, the applied force is transmitted to the work part 3 at a transmission ratio for transmission to the work part 3 lower than the transmission ratio prior to the mobilized contact part 5 coming into contact against the contact receiving part 6 affords an unprecedented, exceedingly practical and eminently innovative work apparatus with which force can be applied delicately in small increments without suddenly subjecting the object 7 to great force exceeding a prescribed value, even in the event that a force sufficiently great to cause the work part 3 to exert force exceeding a prescribed value has been casually applied to the moveable first member or the second member , or both.

Additionally, because the direction in which the mobilized contact part 5 moves closer towards the contact receiving part 6 is a different direction than the direction of relative motion of the mobilized contact part 5 with respect to the contact receiving part 6, the present invention affords an exceedingly practical and eminently innovative work apparatus with which it is possible to easily realize a design whereby the maximum value of the force exerted by the work part 3 on the object 7 targeted for prescribed work remains constant even when the size or thickness of the object 7 varies, or a design whereby the maximum value of the force exerted by the work part 3 on the target article 7 changes depending on the size or thickness of the object 7.

Moreover, in the case of a configuration whereby the work part 3 is operated by the first member 1 and the second member 2 moving in the same direction while maintaining a constant distance, when force is applied to either the moveable first member 1 or the second member 2, specifically to the member furnished with the mobilized contact part 5, the applied force is imparted to the other member as well, specifically, the member furnished with the contact receiving portion 6, and the first member 1 and the second member 2 move in the same direction while maintaining a constant distance, whereupon the work part 3 is operated due to this movement of the first member 1 and the second member 2; and until operating resistance arises in the operated work part 3, the mobilized contact part 5 furnished to either the first member 1 or the second member 2, and the contact receiving portion 6 furnished to the other, move in the same direction while maintaining a constant distance between the first member 1 and the second member 2, in association with the motion of the first member 1 and the second member 2.

When operating resistance arises in the operated work part 3, a mobilization part 4 which, together with the mobilized contact part 5, has been furnished to either the first member 1 or the second member 2, experiences deformation, and due to this deformation of the mobilization part 4, the mobilized contact part 5 is mobilized in a direction closer to the contact receiving part 6.

Specifically, due to the operating resistance arising in the work part 3, motion of the member furnished with the contact receiving portion 6 halts, or the motion speed slows one lower than that of the member furnished with the mobilized contact part 5, giving rise to a difference in motion speed of the mobilized contact part 5 and of the contact receiving portion 6, whereby the mobilization part 4 deforms, the distance between the mobilized contact part 5 and the contact receiving portion 6 narrows, the mobilized contact part 5 moves closer towards the contact receiving portion 6, and as the operating resistance of the work part 3 increases, the amount of deformation of the mobilization part 4 increases, further narrowing the distance between the mobilized contact part 5 and the contact receiving portion 6 and bringing them closer to each other. Then, when the operating resistance of the work part 3 reaches a prescribed value, the mobilized contact part 5 comes into contact against the contact receiving portion 6.

When the mobilized contact part 5 comes into contact against the contact receiving portion 6, even when force is further applied to the member furnished with the mobilized contact part 5, the applied force is not transmitted to the work part 3.

Specifically, when mobilized contact part 5 comes into contact against the contact receiving portion 6, even when force is further applied to the member furnished with the mobilized contact part 5, the applied force is not imparted to the member furnished with the contact receiving portion 6, and the member furnished with the contact receiving portion 6 no longer moves, thereby halting operation of the work part 3, and halting the prescribed work being performed on the object 7.

Consequently, even when force sufficiently great to cause the work part 3 to exert force in excess of a prescribed value is casually applied to the first member 1 or to the second member 2, whichever is furnished with the mobilized contact part 5, prescribed work can be carried out on the object 7 on which the prescribed work is being carried out, without applying force greater than the prescribed value. An unprecedented, exceedingly practical and eminently innovative work apparatus is afforded thereby.

In this way, according to the present invention, when the operating resistance of the work part 3 reaches a prescribed value, the mobilized contact part 5 comes into contact against the contact receiving portion 6, and the applied force is no longer transmitted to the work part 3, in other words, at the point in time at which the mobilized contact part 5 comes into contact against the contact receiving portion 6, the operating resistance of the work part 3 ceases to increase, or the transmission ratio at which the force is transmitted to the work part 3 is lower, in other words, it becomes more difficult for force to be imparted than prior to contact of the mobilized contact part 5 against the contact receiving portion 6.

Afforded thereby is an exceedingly practical, eminently innovative, and unprecedented work apparatus with which prescribed work can be carried out on the object 7 targeted for prescribed work that involves, for example, holding, pressing, or tightening, without applying more force than necessary, i.e., force in excess of a prescribed value, and with which prescribed work can be carried out without suddenly subjecting the object 7 to great force or excessively applying force to the object 7, even when great force is suddenly applied to the first member 1 or to the second member 2.

### Example 1

A specific first example of the present invention shall be described on the basis of the drawings.

The present example is a work apparatus provided with a first member 1 and a second member 2, and additionally provided with a work part 3 that is movably furnished to at least one of the members, and that operates by transmission of force produced by motion of the first member 1 or the second member 2 in response to applied force, to carry out prescribed work. The first member 1 and the second member 2 are designed to move relative to one another, with the work part 3 being operated by means of relative motion of the first member 1 and the second member 2; or the first member 1 and the second member 2 are designed to both move in the same direction while maintaining a constant distance, with the work part 3 being operated by means of movement of the first member 1 and the second member 2 in the same direction while maintaining a constant distance, and carrying out prescribed work on the object 7.

More specifically, either the first member 1 or the second member 2 is furnished with a mobilization part 4 and with a mobilized contact part 5 adapted to be mobilized by deformation of the mobilization part 4, while the other is furnished with a contact receiving part 6 contacted by this mobilized contact part 5. The mobilized contact part 5 moves relative to the contact receiving part 6 without moving closer to the contact receiving part 6, or moves in the same direction as the contact receiving part 6 while maintaining a constant distance therefrom, until operating resistance arises in the work part 3. Once operating resistance has arisen in the work part 3, in the case of moving relatively with respect to the contact receiving part 6, the mobilized contact part 5 is mobilized in a direction different from the direction of relative motion and move closer to the contact receiving part 6 due to deformation of the mobilization part 4; or in the case of moving in the same direction as the contact receiving part 6 while maintaining constant distance therefrom, narrows the distance from the contact receiving part 6 and move closer to the contact receiving part 6 due to deformation of the mobilization part 4. When the operating resistance of the work part 3 reaches a prescribed value, the mobilized contact part 5 comes into contact against the contact receiving part 6.

In the present example, in this state of contact of the mobilized contact part 5 against the contact receiving part 6, when force is further applied to the moveable first member 1 or the second member 2 subsequent to the mobilized contact part 5 contacting the contact receiving part 6, the additional applied force is not transmitted to the work part 3, or the transmission ratio at which this further applied force is transmitted to the work part 3 is reduced as compared with the transmission ratio prior to the contact of the mobilized contact part 5 against the contact receiving part 6.

Specifically, in the present example, once the operating resistance of the work part 3, for example, the holding force at which the work part 3 holds the object 7, or the pressing force at which work part 3 presses the object 7, reaches a prescribed value and the mobilized contact part 5 has contacted the contact receiving part 6 due to deformation of the mobilization part 4, force further applied to the first member 1 or the second member 2, or both, subsequent to this contact is no longer transmitted to the work part 3. In other words, at the point in time at which the mobilized contact part 5 comes into contact against the contact receiving portion 6, the operating resistance of the work part 3 ceases to increase; or the transmission ratio at which the force is transmitted to the work part 3 is lower, i.e., it becomes more difficult for force to be imparted than prior to contact of the mobilized contact part 5 against the contact receiving portion 6. Thus, prescribed work can be carried out on the object 7 which is targeted for prescribed work that involves, for example, holding, pressing, or tightening is to be performed, without applying more force than necessary, i.e., force in excess of a prescribed value, and the prescribed work can be carried out without suddenly subjecting the object 7 to great force and without excessively applying force to the object 7, even when great force is suddenly applied to the first member 1 or the second member 2.

A configuration of the present example in which the first member 1 and the second member 2 move relative to one another, and through this relative motion of the first member 1 and the second member 2, the work part 3 is operated and carries out prescribed work on the object 7, shall be described in greater detail below.

The mobilization part 4 of the present example is constituted of an elastic body, for example, one of metal, synthetic resin, rubber, or the like, and is elastically deformable.

Specifically, in the present example, once the operating resistance of the work part 3 reaches a prescribed value, the mobilization part 4 elastically deforms by a prescribed amount, and the mobilized contact part 5 comes into contact against the contact receiving part 6; and in a state in which the mobilized contact part 5 has contacted the contact receiving part 6, once the operating resistance of the work part 3 falls below the prescribed value, the mobilized contact part 5 retreats from the contact receiving part 6 due to elastic recovery of the mobilization part 4. This same operation can be carried out repeatedly.

In the present example, a contact surface 6A of the contact receiving part 6 contacted by the mobilized contact part 5, or a contact surface 5A of the mobilized contact part 5 contacting the contact receiving part 6, extends in the direction of motion of the moveable first member 1 or the second member 2. Prior to operating resistance arising in the work part 3, the mobilized contact part 5 undergoes relative motion along the contact surface 6A of the contact receiving part 6, or the contact receiving part 6 undergoes relative motion along the contact surface 5A of the mobilized contact part 5, and once operating resistance arises in the work part 3, the mobilized contact part 5 halts relative motion and is mobilized in a direction different from the relative motion direction, moving closer towards the contact receiving part 6; or the mobilized contact part 5, while undergoing the relative motion, becomes mobilized in a direction different from this relative motion direction, moving closer towards the contact receiving part 6.

Specifically, in the present example, the direction of motion of the relative motion of the mobilized contact part 5 with respect to the contact receiving part 6 prior to operating resistance arising in the work part 3, and the direction in which the mobilized contact part 5 moves closer towards the contact receiving part 6 once operating resistance has arisen in the work part 3, are different directions. The distance (contact gap) over which, due to deformation of the mobilization member 4, the mobilized contact part 5 moves closer towards the contact receiving part 6 and comes into contact thereagainst can be easily set to a prescribed distance. Thus, even when the size or thickness of the object 7 targeted for work by the work part 3 varies such that the location of contact of the mobilized contact part 5 against the contact surface 6A of the contact receiving part 6 changes, or the location of contact of the contact surface 5A of the mobilized contact part 5 against the contact receiving part 6 changes, it is possible to set the distance until contact to one such that the amount of deformation of the mobilization part 4 needed for the mobilized contact part 5 to come into contact against the contact receiving part 6 is unchanged; or to set the distance until contact to any of prescribed deformation levels according to the size or thickness of the object 7. The configuration is therefore one by which the prescribed work can be carried out without applying force exceeding a prescribed value to the object 7 on which the prescribed work is being carried out, even when force sufficiently great to cause the work part 3 to exert force in excess of a prescribed value is casually applied to the moveable first member 1 or the second member, 2 or both; by which prescribed work can continue to be carried out under prescribed force (constant force) on the object 7 on which the prescribed work is being carried out, simply by casually applying to the moveable first member 1 or the second member 2, or both, force sufficiently great to cause the work part 3 to exert force at or above a prescribed value; or by which force can be applied delicately in small increments without suddenly subjecting the object 7 to great force, even in the event that force sufficiently great to cause the work part 3 to exert force exceeding a prescribed value has been casually applied to the moveable first member 1 or the second member 2, or both.

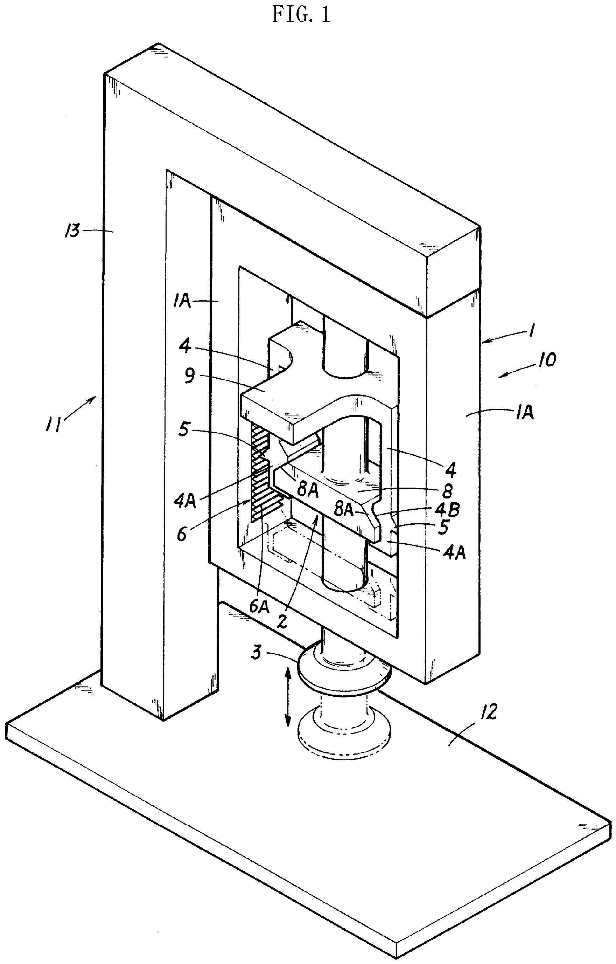

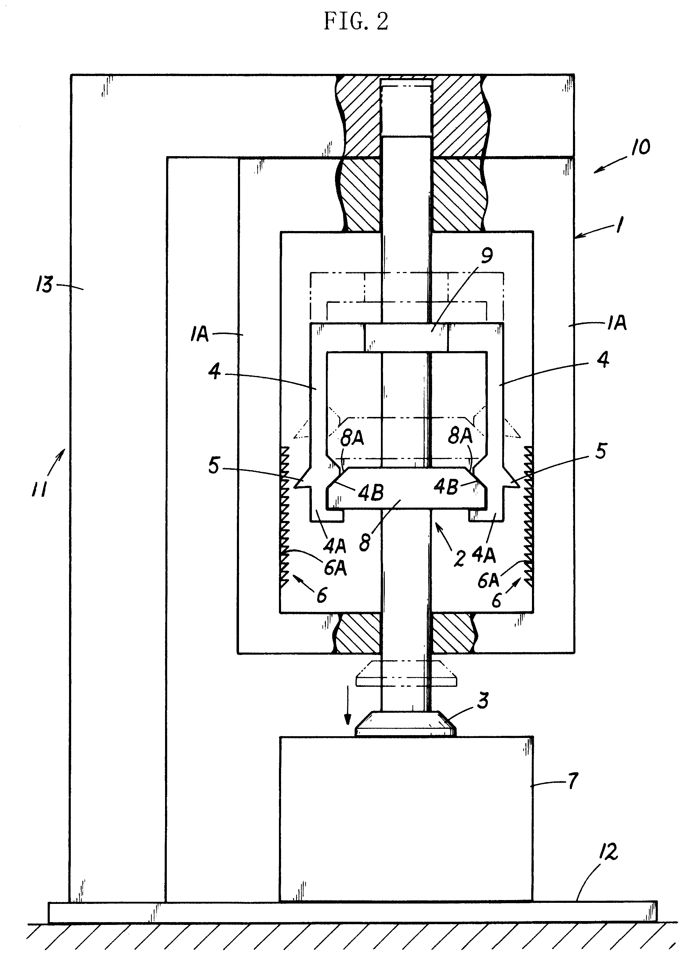

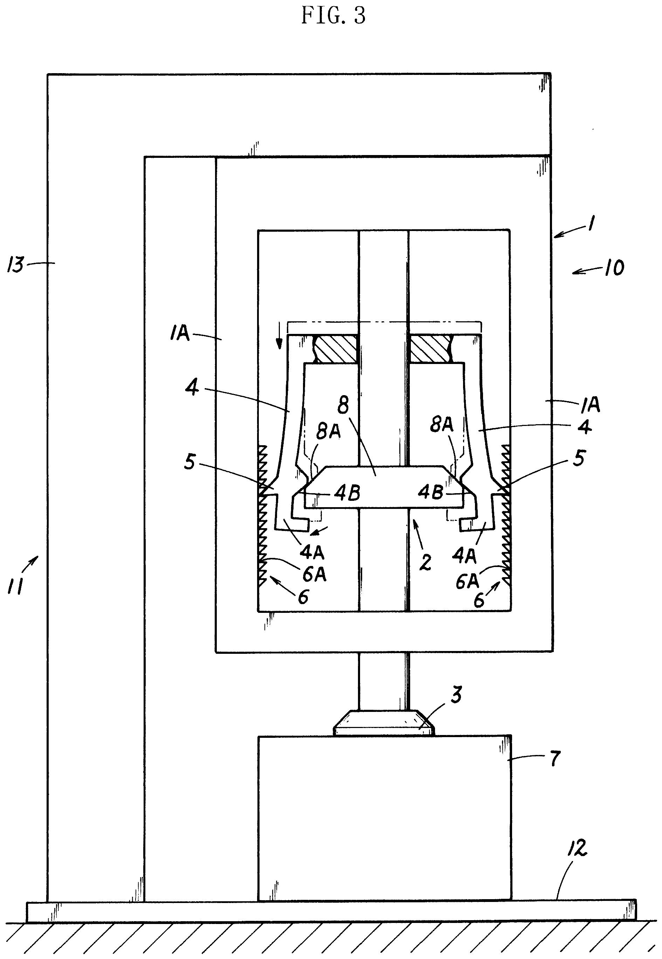

In order to describe the present example in greater detail, a case in which the work apparatus of the present example is configured as a pressing apparatus is discussed in detail below, on the basis of FIGS. 1 to 3.

In the pressing apparatus of the present example, the first member 1 is furnished with contact receiving parts 6, and the second member 2, which is moveable relative to the first member 1, is furnished with mobilization members 4 and with mobilized contact parts 5 which, through deformation of this mobilization members 4, are mobilized to move towards the contact receiving parts 6 and come into contact thereagainst.

In the present example, the work part 3 is furnished to the second member 2, and the work part 3 is operated by movement of the second member 2, so as to press the object 7.

More specifically, the first member 1 is formed by a frame of rectangular shape in front view, furnished with the mutually opposed contact receiving parts 6 which are situated on the inner surfaces of opposed left and right vertical frame parts 1A.

The contact receiving parts 6 have contact surfaces 6A adapted to contact the mobilized contact parts 5 and extending in the direction of movement of the second member 2, which has been movably installed in a frame internal space of the first member 1; and has a plurality of recesses that are arrayed contiguously in a lengthwise direction of the contact surfaces 6A, which recesses engage the mobilized contact parts 5.

The second member 2 has a rod-shaped element furnished midway along the lengthwise direction with a mobilization member distal end-receiving part 8 adapted to engage with distal end parts 4A of the mobilization members 4, the rod being furnished with a moveable manipulation part 9 to which force is applied during manipulation.

The mobilization member distal end-receiving part 8 of the present example is furnished with downward-sloping surfaces 8A, the downward-sloping surfaces 8A being adapted to engage the distal end parts 4A of the mobilization members 4 and slide the ends outwardly by pressing.

The mobilization members 4 furnished to the second member 2 are composed of elastic bodies (metal, synthetic resin, rubber, or the like) formed to strip shape, the distal end parts 4A of which are formed to "C" shape adapted for engaged engagement with the mobilization member distal end-receiving part 8, and is furnished with sloping engagement surfaces 4B adapted to engage the downward-sloping surfaces 8A of the mobilization member distal end-receiving part 8. Up to the point in time that operating resistance arises in the work part 3, the mobilization members 4 do not give rise to elastic deformation, and the distal end parts 4A maintain a state of engaged mating with the mobilization member distal end-receiving part 8. Through pushing manipulation of the manipulation part 9, the distal end parts 4A press against the mobilization member distal end-receiving part 8, and through this pressing of the mobilization member distal end-receiving part 8, the second member 2 is moved downward. Through pulling manipulation of the manipulation part 9, the distal end parts 4A pull the mobilization member distal end-receiving part 8 upward, the second member 2 is moved upward by this upward pulling of the mobilization member distal end-receiving part 8. Once operational resistance arises in the work part 3, the distal end parts 4A slide over the downward-sloping surfaces 8A of the mobilization member distal end-receiving part 8, while giving rise to elastic deformation.

The mobilized contact parts 5, which are formed to a protruding shape adapted to engage the recesses furnished to the contact surfaces 6A of the contact receiving parts 6, protrude outwardly at the distal end parts 4A of the mobilization members 4, and through the aforementioned sliding action of the distal end parts 4A are mobilized and move closer towards the contact receiving parts 6.

The work part 3 of the present example is formed to a disk shape adapted to press the object 7, and is furnished at the bottom end of the second member 2, operating in the vertical direction in association with the motion of the second member 2.

In the present example, the first member 1, the second member 2, and the work part 3 constituted as described above serve as a work main unit 10, the work main unit 10 being furnished with a support part 11. This support part 11 is constituted of a staging part 12 on which the object 7 is staged for work, and a support column 13 formed to approximately inverted "L" shape, rising up from the staging part 12. In the present example, the work main unit 10 provided with the first member 1, the second member 2, and the work part 3 is attached to the short side of this support column 13 of inverted "L" shape.

The operation and effect of the pressing apparatus of the present example constituted in the above manner is described below.

When force is applied to the manipulation part 9 by a pushing manipulation, the distal end parts 4A of the mobilization parts 4 furnished to the manipulation part 9 press the mobilization member distal end-receiving part 8 of the second member 2 (specifically, pressing the downward-sloping surfaces 8A of the mobilization member distal end-receiving part 8 mating with the sloping engagement surfaces 4B furnished to the distal end parts 4A of the mobilization parts 4), and due to this pressing of the mobilization member distal end-receiving part 8, the second member 2 moves downward relative to the first member 1, and the work part 3 is operated by this motion of the second member 2.

At this time, no operating resistance arises in the work part 3 until the work part 3 comes into contact with the object 7, and therefore the mobilization members 4 furnished to the second member 2 do not elastically deform; and in association with motion of the second member 2, the mobilized contact parts 5 furnished to the distal end parts 4A of the mobilization members 4 move along the contact surfaces 6A of the contact receiving parts 6 of the first member 1 without moving closer towards the contact receiving parts 6, i.e., the mobilized contact parts 5 move parallel with respect to the contact surfaces 6A of the contact receiving parts 6.

Through pushing manipulation of the manipulation part 9, the operated work part 3 comes into contact against the target article 7, and as the pushing manipulation continues through application of additional force to the manipulation part 9 while in this state of contact, operating resistance arises in the work part 3. Due to this operating resistance, while the mobilization members 4 elastically deform, the distal end parts 4A of the mobilization members 4 slide along the downward-sloping surfaces 8A of the mobilization member distal end-receiving part 8, and due to this sliding operation of the distal end parts 4A of the mobilization members 4, the mobilized contact parts 5 provided to the distal end parts 4A of the mobilization members 4 are mobilized in a direction towards the contact receiving parts 6 which are situated at locations generally orthogonal to the direction of movement in which the mobilized contact parts 5 moved prior to operating resistance arising in the work part 3.

During sliding of the distal end parts 4A of the mobilization members 4, the sloping engagement surfaces 4B of the distal end parts 4A of the mobilization members 4 press the downward-sloping surfaces 8A of the mobilization member distal end-receiving part 8 engaged thereby towards the lower side, and therefore during sliding operation of the distal end parts 4A of the mobilization members 4 towards the outside, the force applied to the manipulation part 9 is transmitted to the work part 3 via the mobilization member distal end-receiving part 8, and the pressing force at which the work part 3 presses the object 7 increases.

Then, once the operating resistance of the work part 3 reaches a prescribed value, in other words, once the pressing force pressing on the object 7 reaches a prescribed value, the mobilized contact parts 5 come into contact against the contact receiving parts 6.

Specifically, the mobilized contact parts 5, which are formed to protruding shape, engage with recesses provided in the contact surfaces 6A of the contact receiving parts 6, placing the mobilized contact parts 5 in a locked state in relation to the contact receiving parts 6.

With the mobilized contact parts 5 locked through engagement in contact against the contact receiving parts 6, even when force is further applied to the manipulation part 9 of the second member, the applied force will not be transmitted to the work part 3.

That is, when force is further applied to the manipulation part 9 after the mobilized contact parts 5 have come into contact against the contact receiving parts 6, the applied force is not transmitted to the work part 3, and the force exerted on the object 7 by the work part 3, i.e., the pressing force at which the work part 3 presses on the object 7, does not go above the pressing force that was exerted at the point in time at which the mobilized contact parts 5 came into contact against the contact receiving parts 6. There is afforded thereby an unprecedented, exceedingly practical and eminently innovative work apparatus with which, for example, when force sufficiently great to cause the work part 3 to exert pressing force in excess of a prescribed value is casually applied to the manipulation part 9, force exceeding the prescribed pressing force will not be applied to the object 7, so that the pressing work can be carried out at the prescribed pressing force; or with which, simply by casually applying to the manipulation part 9 force sufficiently great to cause the work part 3 to exert pressing force in excess of a prescribed value, prescribed pressing force can be maintained on the object 7, and the work of continuing to press the object 7 can be carried out under constant force.

### Example 2

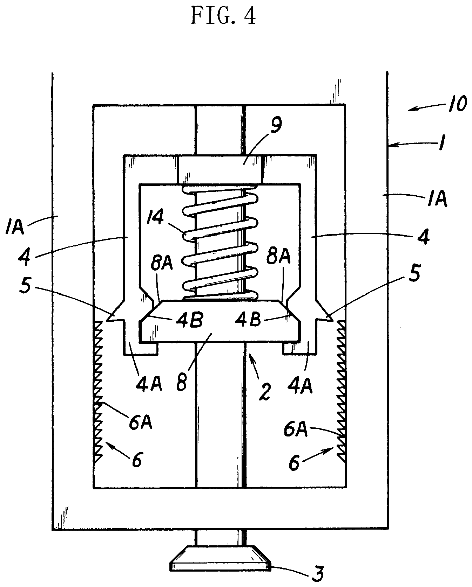

A specific second example of the present invention shall be described on the basis of FIG. 4.

The present example pertains to a case in which, in the apparatus of Example 1, an elastic body 14 is arranged between the manipulation part 9 and the mobilization member distal end-receiving part 8, so that return operation of the manipulation part 9 takes place in a reliable manner, due to the recovery elasticity of the elastic body 14.

Specifically, a coil spring 14 is employed as the elastic body 14. When the manipulation part 9 is push-operated, the manipulation part 9 moves downward while compressing the coil spring 14, and when pushing manipulation of the manipulation part 9 is released, the manipulation part 9, which is pushed upward due to the recovery elasticity of the coil spring 14, is urged and returned to the original position in reliable fashion.

This coil spring 14 also creates resistance during pushing manipulation of the manipulation part 9, thus affording a configuration in which, by applying resistance during pushing manipulation of the manipulation part 9, the timing at which the mobilized contact parts 5 come into contact against the contact receiving parts 6 can be changed.

Specifically, the present example affords a configuration in which, by setting the elastic modulus of the coil spring 14 to one greater than the elastic modulus of the elastically deforming mobilization members 4, the mobilization members 4 do not elastically deform unless force greater than that of the elastic body 14 is applied by the manipulation part 9, and the timing at which the mobilized contact parts 5 come into contact against the contact receiving parts 6 is delayed thereby, so that a higher level of force can be applied to the object 7.

The configuration is otherwise the same as in Example 1.

### Example 3

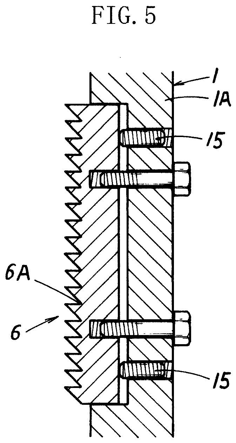

A specific third example of the present invention shall be described on the basis of FIG. 5.

The present example pertains to a case in which the spacing between the mobilized contact parts 5 and the contact receiving parts 6 in the apparatus of Example 1 is adjustable.

Specifically, the present example pertains to a configuration in which the timing at which the mobilized contact parts 5 come into contact against the contact receiving parts 6 can be varied by adjusting the spacing between the mobilized contact parts 5 and the contact receiving parts 6, and the maximum value (peak value) of the pressing force exerted by the work part 3 on the object 7 is easily changed by varying the timing at which the mobilized contact parts 5 come into contact against the contact receiving parts 6.

Specifically, the configuration is one in which the vertical frame parts 1A of the first member 1 are furnished with advancing/retracting protrusions 15 that contact the contact receiving parts 6. When the protrusions 15 are positioned so as to protrude inwardly, the contact receiving parts 6 are positioned in a state of protruding to the inward side of the first member 1; and by protruding inwardly in this way, the contact receiving parts 6 narrow the spacing with respect to the opposed mobilized contact parts 5. By narrow the spacing between the mobilized contact parts 5 and the contact receiving parts 6, the timing at which the mobilized contact parts 5 come into contact against the contact receiving parts 6 is varied (accelerated), and the maximum value (peak value) of the pressing force exerted on the object 7 by the work part 3 is smaller, as compared with the case in which the spacing between the mobilized contact parts 5 and the contact receiving parts 6 is not narrowed.

In place of the protrusions 15, it would be acceptable as well to interpose spacers of adjustable thickness between the inside surfaces of the vertical frame parts 1A of the first member 1 and the back surfaces of the contact receiving parts 6 (the back surfaces of the contact surfaces 6A), so that the contact receiving parts 6 are made to protrude inwardly.

The configuration is otherwise the same as in Example 1.

### Example 4

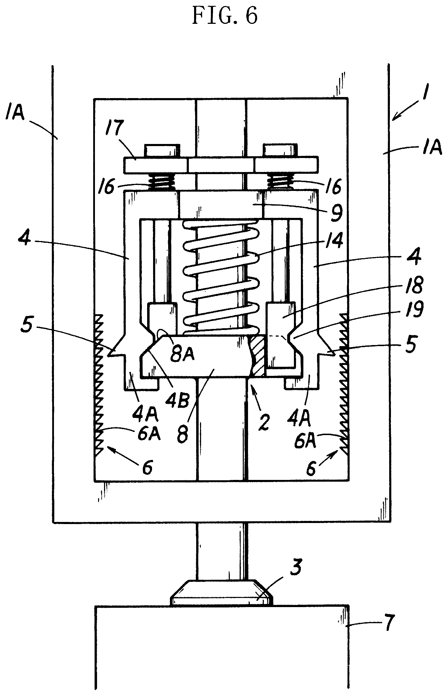

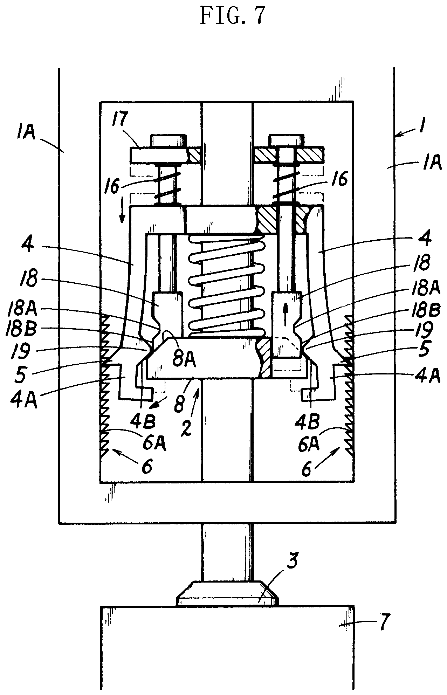

A specific fourth example of the present invention shall be described on the basis of FIGS. 6 and 7.

The present example pertains to a case in which the apparatus of Example 1 is provided with a lock mechanism for maintaining the contact receiving parts 6 in a state of contact against the mobilized contact parts 5.

That is, the configuration of the present example is one in which, after the mobilized contact parts 5 have come into contact against the contact receiving parts 6, the contact receiving parts 6 are maintained in a state of contact against the mobilized contact parts 5 by the lock mechanism, so that the pressing force exerted by the work part 3 is maintained at a constant level, even when force no longer continues to be applied to the manipulation part 9.

Specifically, the lock mechanism of the present example is composed of spring members 16, a pressing part 17 that presses the spring members 16, and engaging parts 18 which are arranged in a retained state passed through the pressing part 17 and are adapted to engage at the distal ends thereof the distal end parts 4A of the mobilization members 4.

More specifically, the engaging parts 18 are furnished with mating recesses 18A adapted to engage with protruding parts 19 that are furnished at the distal end parts 4A of the mobilization members 4; and with contact-locking parts 18B for contact-locking with the protruding parts 19 released from the mating recesses 18A.

FIG. 6 is a diagram showing the unlocked state, and FIG. 7 is a diagram showing the locked state.

As shown in FIG. 7, the present example is configured such that when the mobilized contact parts 5 come into contact against the contact receiving parts 6, the protruding parts 19 at the distal end parts 4A of the mobilization members 4 are released from the mating recesses 18A of the engaging parts 18 of the lock mechanism, and by virtue of the protruding parts 19 being released from the mating recesses 18A, the engaging parts 18 are rendered moveable, whereupon the pressing part 17 is pushed upward by extension of the spring members 16, and the engaging parts 18 move upward due to this lifting of the pressing part 17. Further, due to the upward movement of the engaging parts 18, the protruding parts 19 at the distal end parts 4A of the mobilization members 4 come into contact against the contact-locking parts 18B of the engaging parts 18, and due to this contact of the protruding parts 19 at the distal end parts 4A of the mobilization members 4 against the contact-locking parts 18B of the engaging parts 18, upward-direction movement of the downward-sloping surfaces 8A of the mobilization member distal end-receiving part 8 is disabled, and the mobilized contact parts 5 are maintained in a state of contact against the contact receiving parts 6, even when force ceases to be applied to the manipulation part 9.

The configuration is otherwise the same as in Example 1.

### Example 5

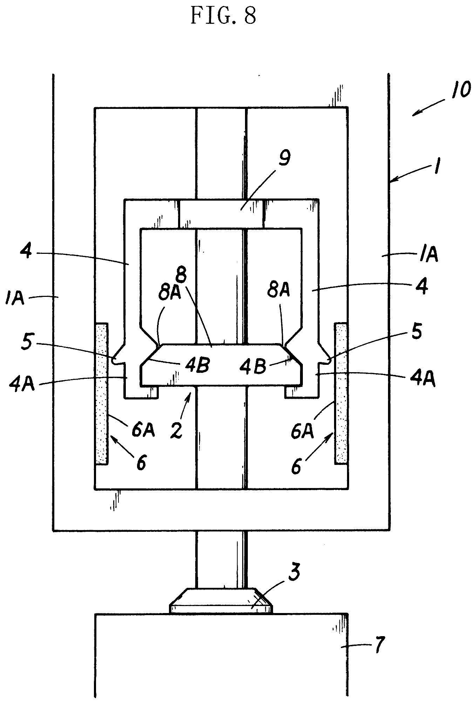

A specific fifth example of the present invention shall be described on the basis of FIGS. 8-10.

The present example pertains to a case in which, in the apparatus of Example 1, the contact surfaces 6A of the contact receiving parts 6 are furnished with an elastic synthetic resin or rubber, and this synthetic resin or rubber having elasticity is configured so as to contact the mobilized contact parts 5. When the mobilized contact parts 5 contact the contact receiving parts 6, friction is generated between the mobilized contact parts 5 and the contact receiving parts 6, and the transmission ratio at which force further applied subsequent to the mobilized contact parts 5 having come into contact against the contact receiving parts 6 is transmitted to the work part 3 is lowered, as compared with the transmission ratio prior to the mobilized contact parts 5 coming into contact against the contact receiving parts 6.

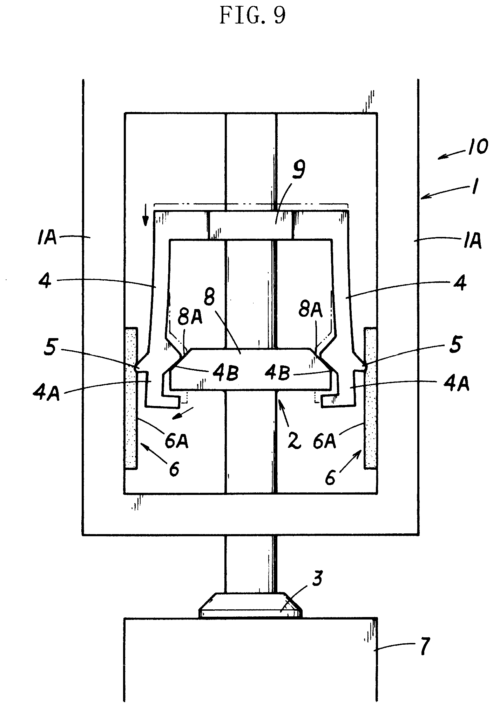

Specifically, on the inside surfaces of the left and right vertical frame parts 1A, the first member 1 is furnished with opposed contact receiving parts 6 composed of elastic bodies (specifically, synthetic resin or rubber), and as shown in FIG. 9, when the mobilized contact parts 5 come into contact against the contact receiving parts 6, the contact receiving parts 6 are pressed by the mobilized contact parts 5 and elastically deform. Through this elastic deformation of the contact receiving parts 6, the mobilized contact parts 5 come into contact engagement therewith in a bite-in locked state. During movement of the contact surfaces 6A of the contact receiving parts 6, the mobilized contact parts 5 give rise to frictional force, and due to this friction, the transmission ratio at which force applied to the manipulation part 9 is transmitted to the work part 3 is lowered as compared with the transmission ratio prior to the mobilized contact parts 5 coming into contact against the contact receiving parts 6.

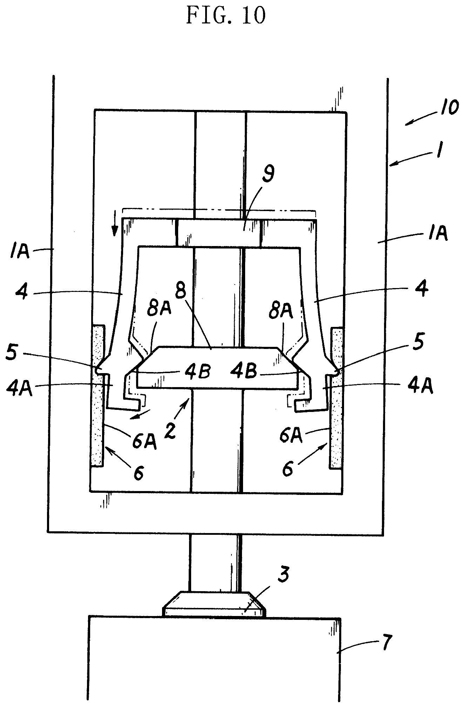

FIG. 10 is a diagram showing a state in which the mobilized contact parts 5 are biting into the contact receiving parts 6 to a greater extent than in FIG. 9. Due to this great friction, movement of the mobilized contact parts 5 across the contact surfaces 6A of the contact receiving parts 6 is disabled, producing a state of bite-in locking with the contact surfaces 6A of the contact receiving parts 6. Due to this bite-in locked state between the contact surfaces 6A of the contact receiving parts 6 and the mobilized contact parts 5, force further applied to the manipulation part 9 after entering the bite-in locked state is not transmitted to the work part 3, and the object 7 continues to be pressed at constant force, even when greater force is applied by the manipulation part 9.

The configuration is otherwise the same as in Example 1.

### Example 6

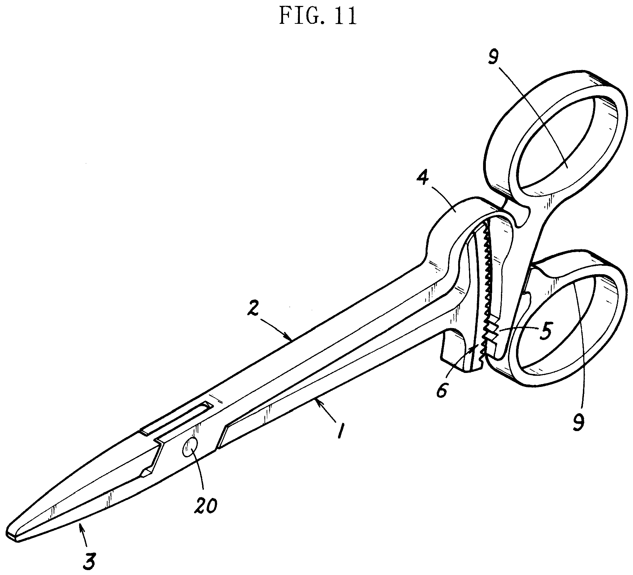

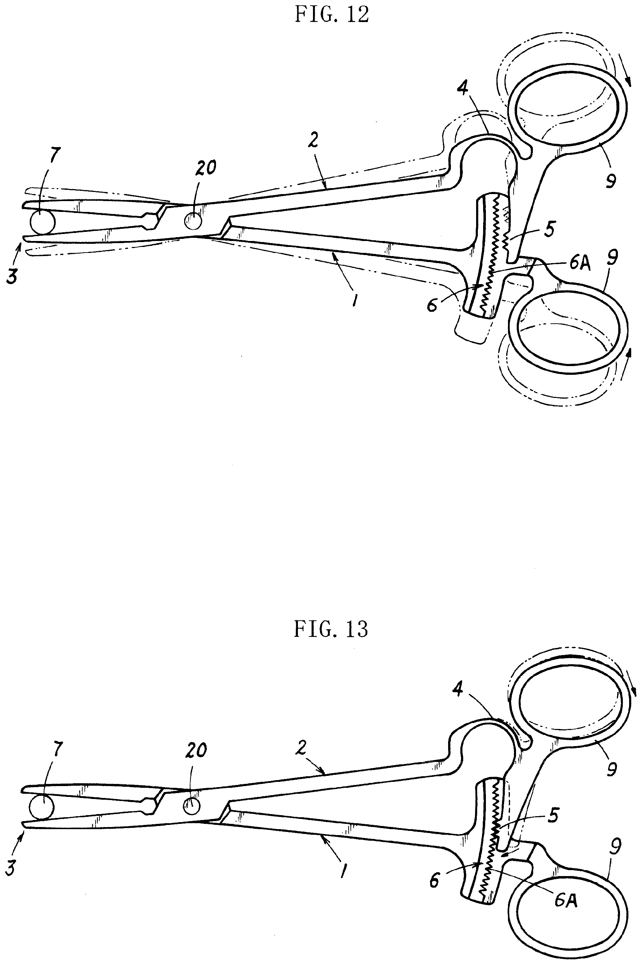

A specific sixth example of the present invention shall be described on the basis of FIGS. 11-13.

The present example pertains to a case in which the work apparatus of Example 1 is configured as a holding apparatus.

Specifically, the first member 1 and the second member 2 are arranged intersecting and pivotably attached so as to move relative to one another. The distal end-side parts of the opposed first member 1 and second member 2 constitute a work part 3 as a holding part for holding an object 7, and through opening or closing of manipulation parts 9 provided at the basal end of each of the opposing first member 1 and second member 2, the object 7 is held, or the held object 7 is released, through opening or closing operation of the work part 3. Further, with the object 7 being held by the work part 3, when force is applied to the manipulation parts 9, once the holding force at which the object 7 is held by the work part 3 reaches a prescribed value, even when force is further applied to the manipulation parts 9, the force further applied to the manipulation parts 9 is not transmitted as holding force to the work part 3, and the work part 3 can continue to hold the object 7 at constant holding force.

To describe in greater detail, the first member 1 and the second member 2 are formed to elongated strip shape from members comprising a suitable material, e.g., a metal or synthetic resin, each of the distal end-side parts being formed to a tapered shape adapted to hold the object 7, and each of the basal ends being furnished with a manipulation part 9 for opening/closing operation of the work part 3 constituted by the distal end-side parts of these opposed first member 1 and second member 2 formed to tapered shape. The first member 1 is furnished with a contact receiving part 6, and the second member 2 is furnished with a mobilization part 4 and a mobilized contact part 5 that is mobilized through elastic deformation of the mobilization part 4.

To describe in greater detail, the first member 1 is furnished with the contact receiving part 6 situated between a pivotal attachment part 20 at which the first member 1 and the second member 2 are pivotably attached, and the manipulation part 9 furnished at the basal end. This contact receiving part 6 extends in the direction of movement of the first member 1, and has a plurality of recesses arrayed contiguously in the lengthwise direction of the contact surface 6A.

The second member 2 is furnished with the mobilization part 4 and the mobilized contact part 5 which are situated between the pivotal attachment part 20 and the manipulation part 9 furnished to the basal end. The mobilization part 4 is formed to an outwardly convex bowed shape or arcuate shape; the mobilized contact part 5 is formed to a shape protruding inwardly at the basal end of the mobilization part 4 and is furnished at the distal end with downward-facing protrusions. The protrusions are formed to a shape adapted to mate with recesses furnished to the contact surface 6A of the contact receiving part 6.

The operation and effect of the holding apparatus of the present example configured as shown above shall be described below.

When force is applied to the manipulation part 9 during a closing operation, the first member 1 and the second member 2 move in a direction bringing them closer to one another, and due to this movement of the first member 1 and the second member 2, the work part 3 which is constituted by the opposed distal end sides of the first member 1 and the second member 2 is operated in the closing direction.

During this process, operating resistance does not arise in the work part 3 until the work part 3 comes into contact against the object 7 and holds the object 7, and therefore the mobilization part 4 furnished to the second member 2 does not elastically deform, and in association with movement of the first member 1 and the second member 2, the mobilized contact part 5 which is continuous with the mobilization part 4 moves along the contact surface 6A of the contact receiving part 6 of the first member 1 without getting closer to the contact receiving part 6, i.e., moves parallel to the contact surface 6A of the contact receiving part 6.

When force is further applied to the manipulation part 9 during the closing operation in a state in which the work part 3, having been operated by the closing operation of the manipulation part 9, is contacting the object 7 and holding the object 7, operating resistance arises in the work part 3 due to holding of the object 7. Because of this operating resistance, the mobilization part 4 elastically deforms. Due to this elastic deformation of the mobilization part 4, the mobilized contact part 5 is mobilized in a direction moving it closer towards the contact receiving part 6, which is situated at a location generally orthogonal with respect to the direction of movement of the mobilized contact part 5 prior to operating resistance arising in the work part 3.

During the time that the mobilization part is elastically deformed, force applied to the manipulation part 9 is transmitted to the work part 3, and the holding force by which the work part 3 holds the object 7 increases.

Then, when the operating resistance of the work part 3 reaches a prescribed value, in other words, when the holding force holding the object 7 reaches a prescribed value, the mobilized contact part 5 comes into contact against the contact receiving part 6.

Specifically, the protrusions furnished to the distal end of the mobilized contact part 5 mate with the recesses furnished to the contact surface 6A of the contact receiving part 6, placing the mobilized contact part 5 in a locked state with respect to the contact receiving part 6.

Once the mobilized contact part 5 has come into contact against the contact receiving part 6 and entered this mated and locked state, even when force is further applied to the manipulation part 9, the applied force is not transmitted to the work part 3.

That is, when force is further applied to the manipulation part 9 after the mobilized contact part 5 has come into contact against the contact receiving part 6, the applied force is not transmitted to the work part 3, and the force exerted on the object 7 by the work part 3, i.e., the holding force at which the object 7 is held by the work part 3, does not go above the holding force that was exerted at the point in time that the mobilized contact part 5 came into contact against the contact receiving part 6. There is afforded thereby an unprecedented, exceedingly practical and eminently innovative work apparatus with which, for example, even when force sufficiently great to cause the work part 3 to exert holding force in excess of a prescribed value is casually applied to the manipulation part 9, force exceeding the prescribed holding force will not be applied to the object 7, so that the holding work can be carried out at the prescribed holding force; or with which, simply by casually applying to the manipulation part 9 force sufficiently great to cause the work part 3 to exert holding force in excess of a prescribed value, prescribed holding force can be maintained on the object 7, and the work of continuing to hold the object 7 can be carried out under constant force.

### Example 7

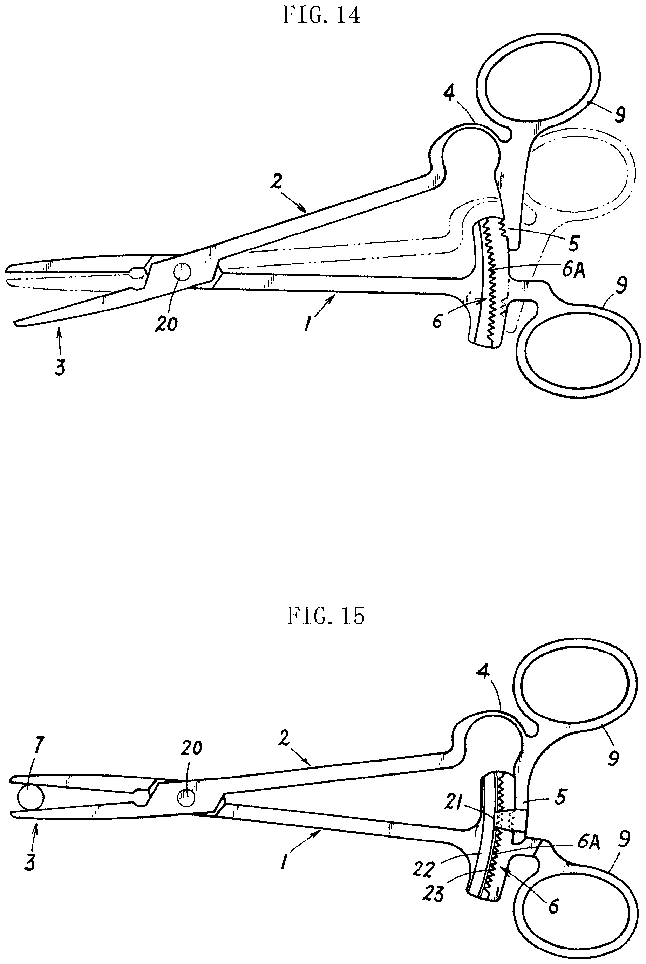

A specific seventh example of the present invention shall be described on the basis of FIG. 14.

The present example pertains to a case in which the contact receiving part 6 has a different configuration, in the holding apparatus of Example 6.

Specifically, the configuration is such that the spacing of the mobilized contact part 5 and the contact receiving part 6 changes according to the position at which the mobilized contact part 5 comes into contact against the contact receiving part 6.

More specifically, the contact surface 6A of the contact receiving part 6 is downward sloping towards the inside, and in the event that the object 7 being held is so large that the mobilized contact part 5 comes into contact against an inside position of the contact receiving part 6, the contact spacing widens, whereas in the event that the object 7 being held is so small that the mobilized contact part 5 comes into contact against an outside position of the contact receiving part 6, the contact spacing narrows. Thus, the larger the size of the object 7 being held, in other words, the wider the degree of opening of the work part 3 that holds the object 7 when the object 7 is being held, the greater will be the maximum value (peak value) of holding force at which the object 7 is held by the work part 3.

According to the configuration of the present example, it is possible for the spacing of the mobilized contact part 5 and the contact receiving part 6 to be set to prescribed spacing appropriate to each individual contact position. There is no limitation to the configuration described above, and it would be acceptable, for example, for the contact surface 6A of the contact receiving part 6 to be downward sloping towards the outside, so that the smaller the size of the object 7 being held, in other words, the narrower the degree of opening of the work part 3 that holds the object 7 when the object 7 is being held, the greater will be the maximum value (peak value) of holding force at which the object 7 is held by the work part 3.

The configuration is otherwise the same as in Example 6.

### Example 8

A specific eighth example of the present invention shall be described on the basis of FIGS. 15-18.

The present example pertains to a case in which the holding apparatus of Example 6 is provided with a lock mechanism for maintaining the mobilized contact part 5 in a state of contact against the contact receiving part 6.

That is, the present example is configured such that, by means of this lock mechanism, once the mobilized contact part 5 has come into contact against the contact receiving part 6, the mobilized contact part 5 is maintained in a state of contact against the contact receiving part 6 even when force no longer continues to be applied to the manipulation part 9; and the holding force exerted by the work part 3 is maintained at a constant level.

The lock mechanism of the present example comprises a locking claw 21 furnished to the mobilized contact part 5, and a lock receiving slot 22 furnished to the contact receiving part 6. When the mobilized contact part 5 comes into contact against the contact receiving part 6, the locking claw 21 furnished to the mobilized contact part 5 catches and locks into the lock receiving slot 22 furnished to the contact receiving part 6, and the mobilized contact part 5 is maintained in a state of contact against the contact receiving part 6.

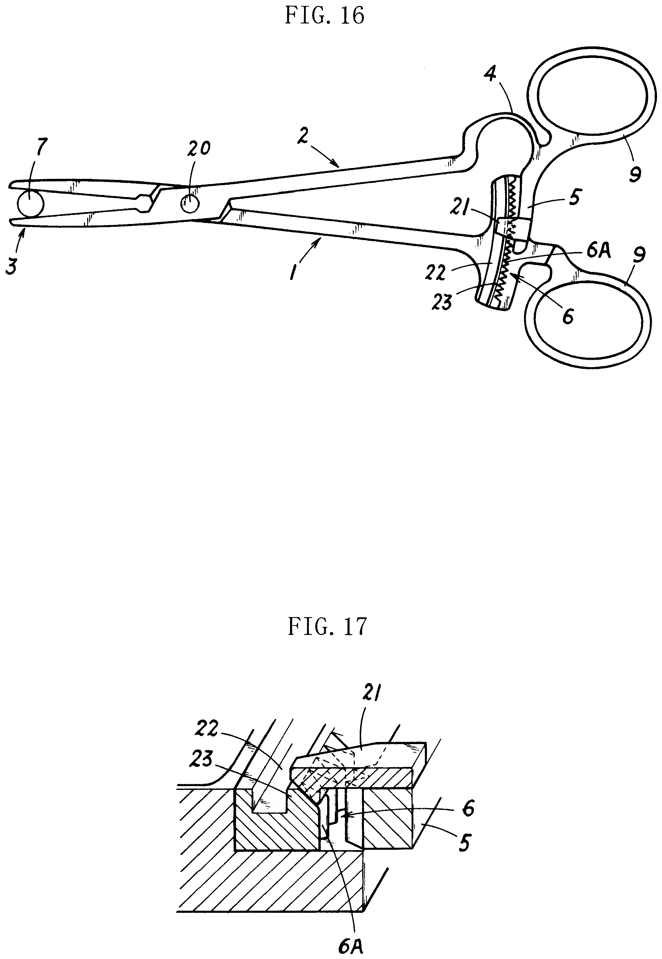

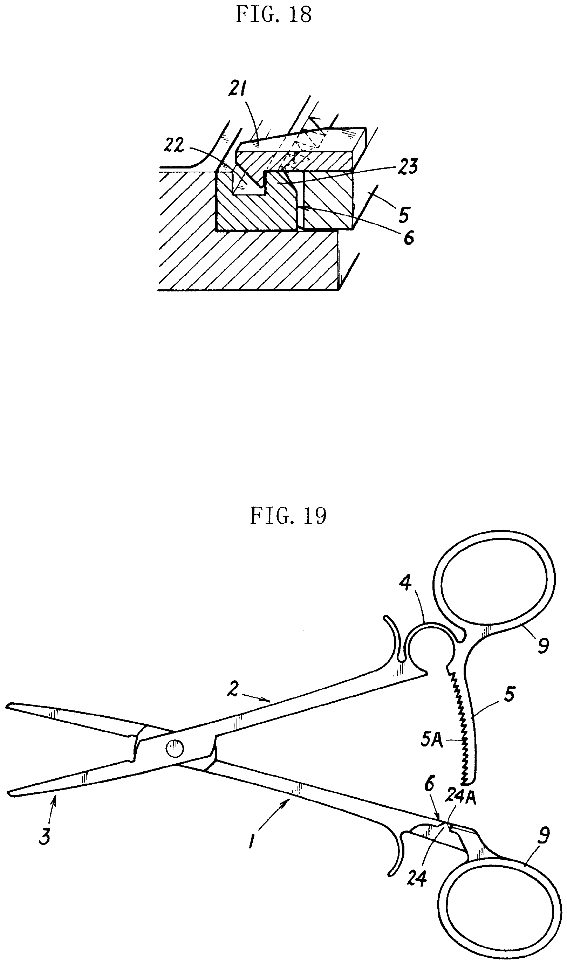

FIG. 17 is a diagram showing the unlocked state, and FIG. 18 is a diagram showing the locked state.

As shown in these diagrams, the present example is configured such that when operating resistance arises in the work part 3, the mobilization part 4 elastically deforms, and the mobilized contact part 5 moves closer to and comes into contact against the contact receiving part 6, the locking claw 21 surmounts a step part 23 of the contact receiving part 6, drops into the lock receiving slot 22, and becomes engaged therein, whereupon the hook-shaped distal end of the locking claw 21 engages the inner wall of the lock receiving slot 22 and becomes locked while caught therein in a pressed state due to the recovery elastic force of the mobilization member 4, so that the mobilized contact part 5 is maintained in a state of contact against the contact receiving part 6 even when force is no longer applied to the manipulation part 9.

The configuration is otherwise the same as in Example 6.

### Example 9

A specific ninth example of the present invention shall be described on the basis of FIGS. 19-21.

The present example pertains to a case in which, in the holding apparatus of Example 6, the contact surface 5A of the mobilized contact part 5 that comes into contact against the contact receiving part 6 contact receiving part 6 extends in the direction of movement of the second member 2 to which the mobilized contact part 5 is furnished, and additionally, a lock mechanism is provided for maintaining the mobilized contact part 5 in a state of contact against the contact receiving part 6.

Specifically, the mobilized contact part 5 is formed to a shape that protrudes inwardly in the direction of closing of the second member 2, and the contact surface 5A of the mobilized contact part 5 is formed in an arcuate shape; and is formed in a shape such that, when the size (diameter, thickness, or the like) of the object 7 held by the work part 3 has changed, while the contact position at which the mobilized contact part 5 comes into contact against the contact receiving part 6 varies, the amount of deformation of the mobilization member 4 does not change, permitting the mobilized contact part 5 to contact the receiving part 6 at a constant amount of change.

Further, the mobilized contact part 5 of the present example is furnished with a plurality of contiguous recesses along the lengthwise direction of the contact surface 5A.

The distal end of the contact receiving part 6 is formed to a protruding shape, so as to enable mating with the recesses furnished to the contact surface 5A of the mobilized contact part 5.

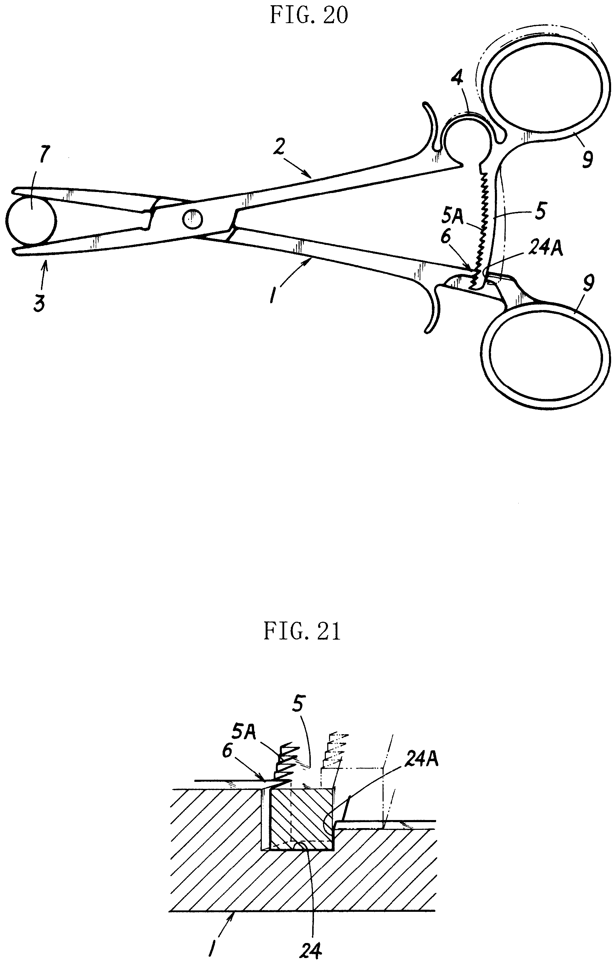

As shown in FIG. 21, the lock mechanism for maintaining a state of contact between the mobilized contact part 5 and the contact receiving part 6 comprises a drop-in recess 24 furnished to the first member 1. Specifically, when the mobilized contact part 5 comes into contact against the contact receiving part 6, the mobilized contact part 5 drops into the drop-in recess 24 and becomes engaged therewith; and while engaging a side surface 24A of the drop-in recess 24 in a pressed state, the mobilized contact part 5 is maintained in a locked state due to the recovery elastic force of the mobilization member 4, so that the mobilized contact part 5 is maintained in a state of contact against the contact receiving part 6 even when force is no longer applied to the manipulation part 9.

The configuration is otherwise the same as in Example 6.

### Example 10

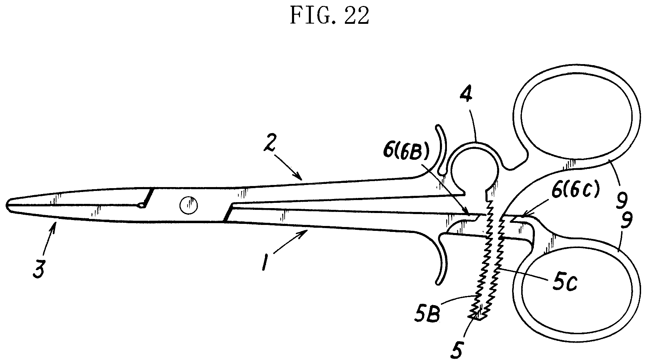

A specific tenth example of the present invention shall be described on the basis of FIG. 22.

The present example pertains to a case in which the holding apparatus of Example 9 is configured such that work is possible during both holding work and diameter expansion work, and such that during diameter expansion work, once the operating resistance of the work part 3 reaches a prescribed value, the mobilized contact part 5 comes into contact against the contact receiving part 6, and subsequent to making contact, force further applied to the manipulation part 9 is not transmitted to the work part 3.

Specifically, the mobilized contact part 5 is furnished with a first contact surface 5B for contacting the contact receiving part 6 during holding work, and with a second contact surface 5C for contacting the contact receiving part 6 during diameter expansion work, the first contact surface 5B and the second contact surface 5C being furnished with a plurality of contiguous recesses arrayed in the lengthwise direction.

The contact receiving part 6 comprises a first contact surface 6B for contacting the first contact surface 5B, and a second contact surface 6C for contacting the second contact surface 5C. The first contact surface 6B and the second contact surface 6C are furnished in opposition across a gap within which it is possible to situate the mobilized contact part 5.

The configuration is otherwise the same as in Example 9.

### Example 11

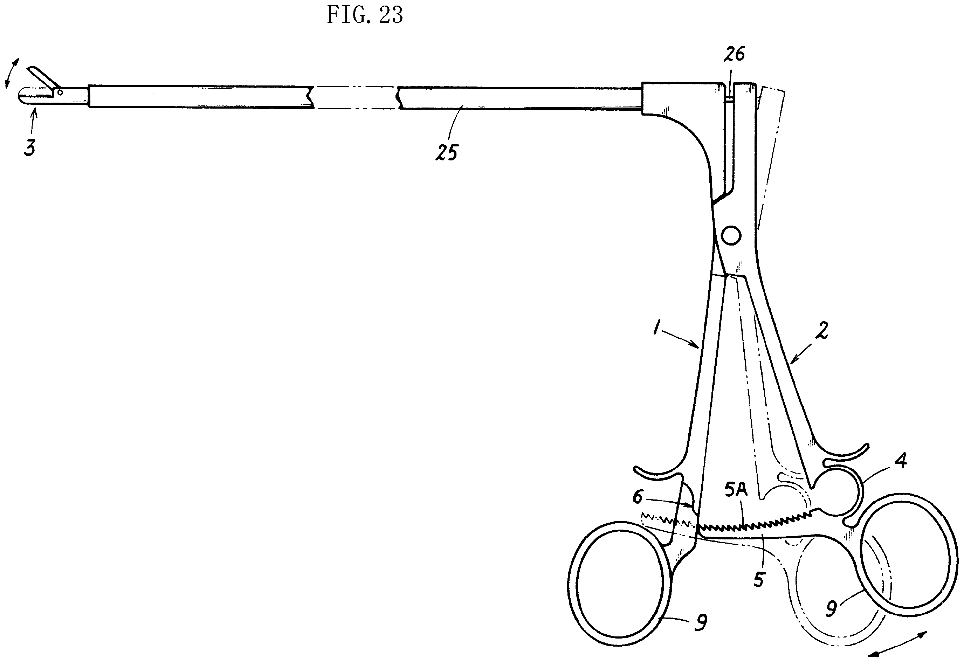

A specific eleventh example of the present invention shall be described on the basis of FIG. 23.

The present example pertains to a case in which the holding apparatus of Example 9 is configured as a forceps for arthroscopic surgery.

Specifically, a first member 1 and a second member 2 are pivotably attached, and by a closing operation of manipulation parts 9 furnished at each basal end, each of the distal end sides of the opposed first member 1 and second member 2 move in a direction of mutual separation. Opening and closing operation of the work part 3 is accomplished through this separating movement of the distal end sides of the first member 1 and the second member 2.

More specifically, the distal end side of the first member 1 is furnished with a tube-shaped extension part 25, and the work part 3 is furnished to the distal end of this extension part 25. The work part 3 is opened and closed by movement of a wire 26 furnished at the distal end side of the second member 2.

The configuration is otherwise the same as in Example 9.

### Example 12

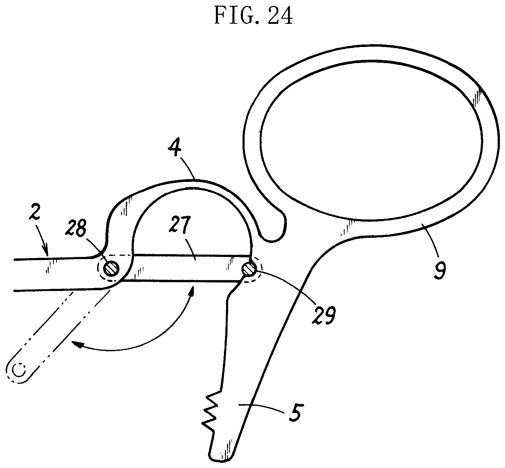

A specific twelfth example of the present invention shall be described on the basis of FIG. 24.

The present example pertains to a case in which the holding apparatus of Example 6 is provided with a mobilization part deformation-inhibiting mechanism for inhibiting elastic deformation of the mobilization part 4.

Specifically, the mobilization part deformation-inhibiting mechanism is configured such that a lock bar 27 arranged bridging across the two ends of the mobilization part 4 which has been formed to a bowed shape or arcuate shape functions like a strut to inhibit elastic deformation of the mobilization part 4.

More specifically, as shown in FIG. 24, the lock bar 27 at one end is journaled to a journal part 28 furnished to one end of the mobilization part 4, and at the other end is unlockably locked into a locking part 29 furnished to the other end of the mobilization part 4. By locking this lock bar 27 into the locking part 29 so as to bridge across the two ends of the mobilization part 4, elastic deformation of the mobilization part mobilization part 4 is locked, resulting in operation comparable to that of a conventional ordinary holding device, i.e., one of uninterrupted transmission of force applied to the manipulation part 9 to the work part 3, with no reduction in the transmission ratio at which force is transmitted to the work part 3, so that the work part 3 exerts holding force commensurate with the force applied to the manipulation part 9; and by releasing the lock bar 27 from the locking part 29, locking of elastic deformation of the mobilization part 4 is canceled.

The configuration is otherwise the same as in Example 6.

### Example 13

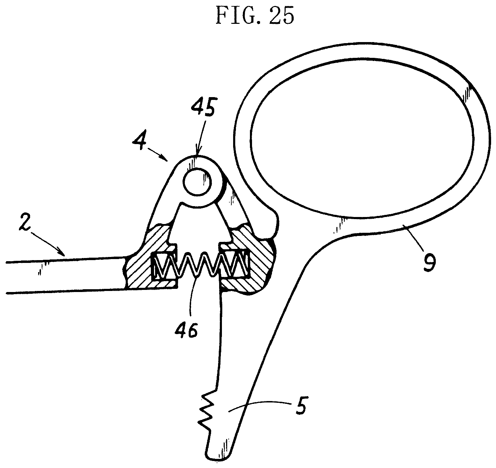

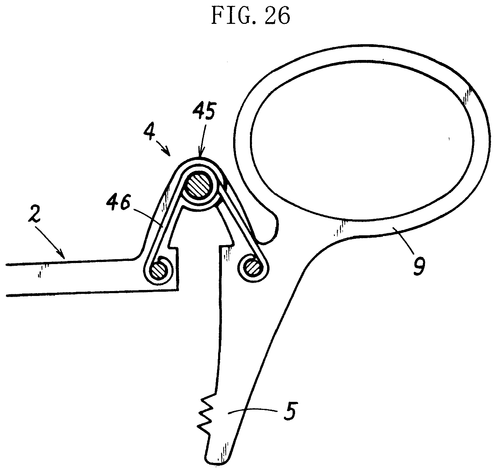

A specific thirteenth example of the present invention shall be described on the basis of FIGS. 25 and 26.

The present example pertains to a case in which the mobilization part 4 of the holding apparatus of Example 6 has a different configuration, specifically, the mobilization part 4 takes the form of a hinge.

To describe more specifically, as shown in FIG. 25, the mobilization part 4 of the present example comprises a hinge part 45 that is continuous with the mobilized contact part 5, and an elastic body 46 for applying bias towards the open position to the hinge part 45. Normally, the hinge part 45 is maintained in the open state by the elastic body 46 (in the present example, a coil spring), but when operating resistance arises in the work part 3, the elastic body 46 (coil spring) which applies the bias towards the open position to the hinge part 45 now contracts, the mobilization part 4 deforms due to closing of the hinge part 45, and the deformation of the mobilization part 4 produced by closing of the hinge part 45 mobilizes the mobilized contact part 5, which can then move closer to the contact receiving part 6.

In the present example, a coil spring was employed as the elastic body 46, but a configuration employing a torsion spring in place of a coil spring, as shown in FIG. 26, would also be acceptable.

In the present example, where the elastic body 46 constituting the mobilization part 4 is one in which the elastic modulus, and more specifically, the spring constant of the coil spring or the torsion spring, has the desired magnitude (set value), the extent of deformation of the mobilization part 4 can be adjusted to the desired extent of deformation.

That is, when a coil spring or torsion spring having a low spring constant is employed, the mobilization part 4 easily deforms, and the mobilized contact part 5 is mobilized at a low level of operational resistance by the work part 3 and comes into contact against the contact receiving part 6, whereby the maximum holding force exerted on the object 7 by the work part 3 will be low; whereas when a coil spring or torsion spring having a high spring constant is employed, the mobilization part 4 deforms with difficulty, and therefore the maximum holding force that can be exerted on a object by the work part 3 can be greater. That is, the present example affords an innovative holding apparatus with which it is possible to easily design and make adjustments to the maximum holding force that the work part 3 is able to exert, doing so by setting the elastic modulus of the elastic body 46 (spring constant of the coil spring or torsion spring).

The configuration in other respects is the same as in Example 6.

### Example 14

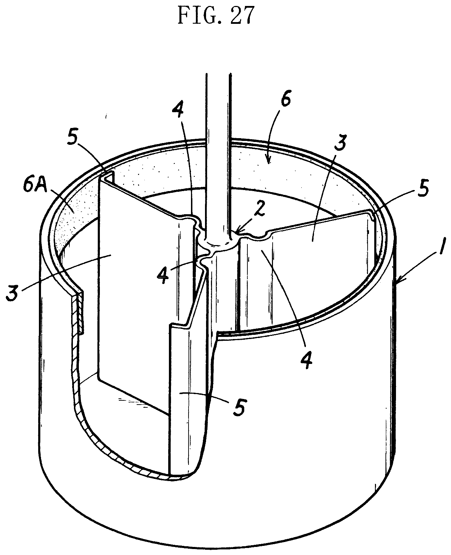

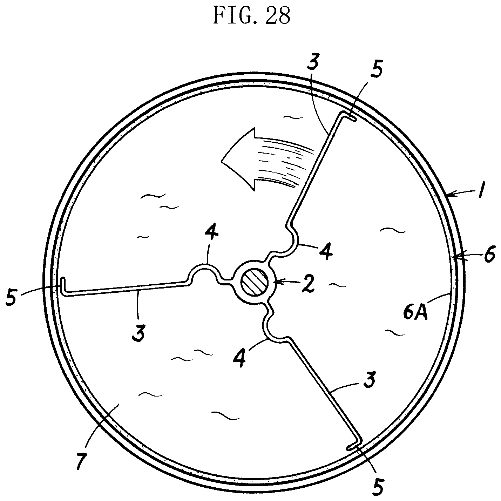

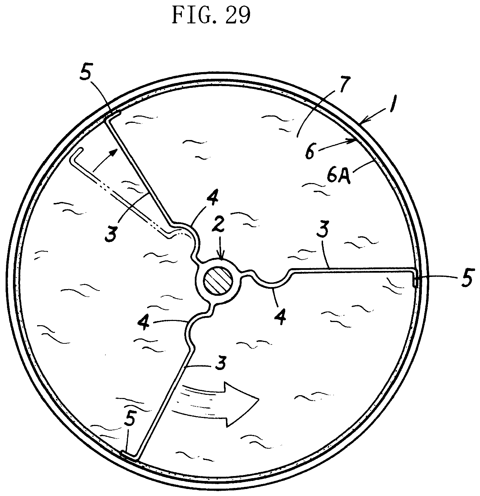

A specific fourteenth example of the present invention shall be described on the basis of FIGS. 27-29.

The present example pertains to a case in which the work apparatus of Example 1 is configured as a stirring apparatus.

Specifically, the apparatus comprises a first member 1 configured as a receptacle, a second member 2 configured as a rotary shaft, and work parts 3 configured as stirring paddles.

More specifically, the first member 1 (receptacle) is configured as a bottomed, cylindrical receptacle adapted to receive an object 7, and furnished in the upper portion of the inside peripheral surface with a contact receiving part 6.

The contact receiving part 6 may comprise an elastic synthetic resin or rubber, or the contact surface 6A may be furnished with an elastic synthetic resin or rubber, extending about the circumference in an upper edge portion of the inside peripheral surface of the first member 1 (receptacle).

The second member 2 (rotary shaft) is furnished rotatably with respect to the first member 1 (receptacle), and is furnished on the peripheral surface thereof with work parts 3 (stirring paddles) via intervening mobilization parts 4, the distal ends of the work parts 3 (stirring paddles) being furnished with mobilized contact parts 5.

The mobilization parts 4 of the present example comprise plate-shaped members formed to a bowed shape or arcuate shape, one end of the mobilization parts 4 being provided in an outwardly (radially) protruding manner on the peripheral surface of the second member 2 (rotary shaft) so as to be oriented such that the open side faces in the rotation direction.

The work parts 3 (stirring paddles) comprise plate-shaped members formed to a rectangular shape, and are continuous with the other ends of the mobilization parts 4 that protrude from the second member 2 (rotary shaft).

The mobilized contact parts 5 comprise plate-shaped members formed to a rectangular shape, and are continuous with the distal ends of the work parts 3 (stirring paddles), with the distal ends thereof facing in the opposite direction from the rotation direction.

That is, in the stirring apparatus of the present example, during stirring process of the object 7 received in the first member 1 (receptacle), as the viscosity of the object 7 increases due to stirring, and the operating resistance of the work parts 3 (stirring paddles) reaches a prescribed value, in other words, when the viscosity of the object 7 reaches a prescribed value, the mobilized contact parts 5, which have been mobilized due to elastic deformation of the mobilization parts 4, come into contact against the contact receiving parts 6 which have been furnished on the upper inside peripheral surface of the first member 1 (receptacle), whereby friction is generated between the mobilized contact parts 5 and the contact receiving parts 6. The friction which has arisen halts the rotary action of the second member 2 (rotary shaft), halting the stirring process; or the rotary action (rotation speed) of the second member 2 (rotary shaft) declines, thus lowering the stirring force stirring the object 7, whereby the object 7 is not stirred any more than necessary, and the viscosity of the object does not exceed a prescribed value.

The configuration is otherwise the same as in Example 1.

### Example 15

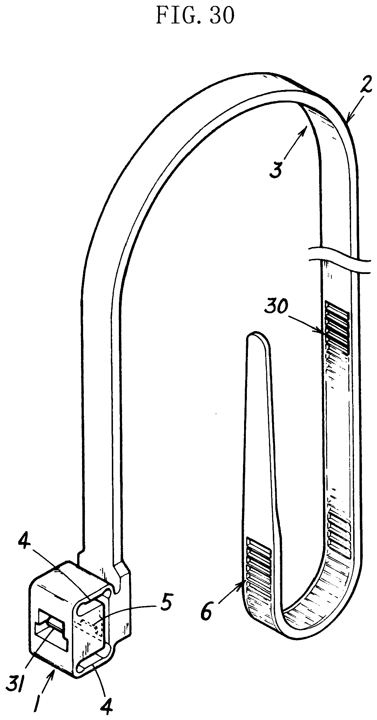

A specific fifteenth example of the present invention shall be described on the basis of FIGS. 30-33.

The present example pertains to a case in which the work apparatus of Example 1 is configured as a tightening apparatus, specifically, as shown in FIG. 30, configured as a cable tie. In this case, the first member 1 and the second member 2 are integrally connected, and a portion of the second member 2 moves relative to the first member 1.

The cable tie of the present example comprises the first member 1 which is configured as a head part, and the second member 2 which is configured as a band part. The first member 1 (head part) is furnished with a mobilization part 4 and a mobilized contact part 5 that is mobilized through elastic deformation of this mobilization part 4; the second member 2 (band part) is furnished with a contact receiving part 6 and a manipulation part 9. Additionally, the second member 2 (band part) is configured as a work part 3 for tying objects 7 together.

More specifically, the second member 2 (band part) is furnished on the inside surface with a saw-toothed engaging part 30 (equivalent to the serrations of an ordinary cable tie); furnished on the back surface, i.e., a location back-to-back with the saw-toothed engaging part 30, with the contact receiving part 6; and furnished at the distal end with the manipulation part 9.

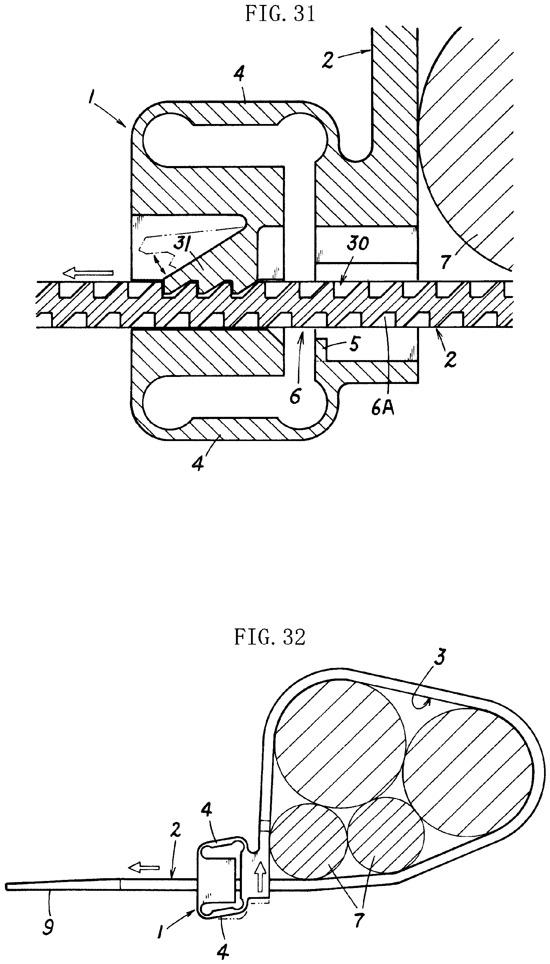

As shown in FIG. 31, in the present example, until operating resistance arises in the work part 3, in the same way as in an ordinary cable tie, a claw part 31 of the first member 1 (head part) mates with and engages the saw-toothed engaging part 30 furnished to the second member 2 (band part), thereby disabling movement of the second member 2 (band part) in the return direction (direction of loosening).

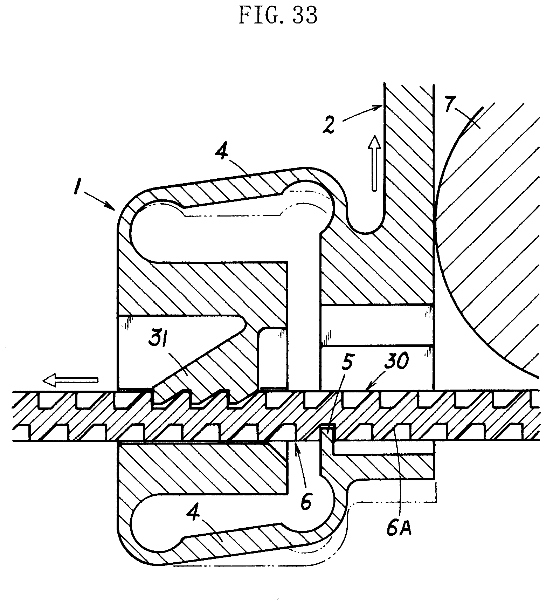

As the second member 2 (band part) encircling the objects 7 comes into contact against the objects 7, and operating resistance (tightening force) arises in the work part 3, through pulling manipulation of the manipulation part 9 furnished to the distal end of the second member 2 (band part), the lower end of the first member 1 (head part) which is continuous with the basal end of the second member 2 (band part) is tensioned, and due to this tensioning of the lower end of the first member 1 (head part), the mobilization part 4 elastically deforms as shown in FIGS. 32 and 33. Due to this elastic deformation of the mobilization part 4, the mobilized contact part 5 furnished to the mobilization part 4 is mobilized towards the inside, and comes into contact against the contact receiving part 6 furnished to the second member 2 (band part). The mobilized contact part 5, upon coming into contact against the contact receiving part 6, mates with and locks into recesses furnished to the contact surface 6A of the contact receiving part 6, thereby disabling movement of the second member 2 (band part), so that even when force is further applied to the manipulation part 9, the second member 2 (band part) does not move, and the tightening force at which the work part 3 tightens the objects 7 does not go above a prescribed value.

That is, in the present example, once the tightening force at which the work part 3 tightens the objects 7 reaches a prescribed value, tightening action by the work part 3 is disabled through contact of the mobilized contact part 5 against the contact receiving part 6, thus providing a cable tie configured such that the objects 7 cannot be tightened at a tightening force stronger than a prescribed value. Consequently, the present example affords an exceedingly practical, unprecedented, and innovative cable tie which obviates the need to carry out the tightening operation cautiously so as to avoid damaging the objects 7 due to over-tightening, when tightening the objects 7, and which disables control input so that, even during pulling manipulation of the manipulation part 9 by casual application of force, the objects 7 cannot be tightened any further once the tightening force has reached the prescribed value.

The configuration is otherwise the same as in Example 1.

### Example 16

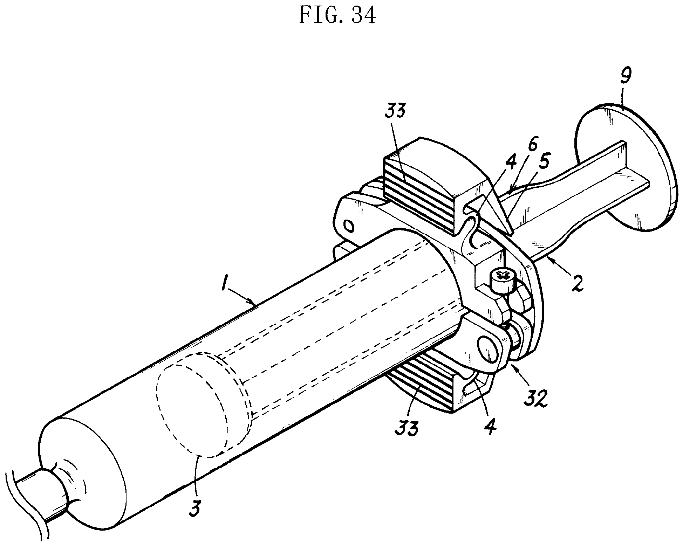

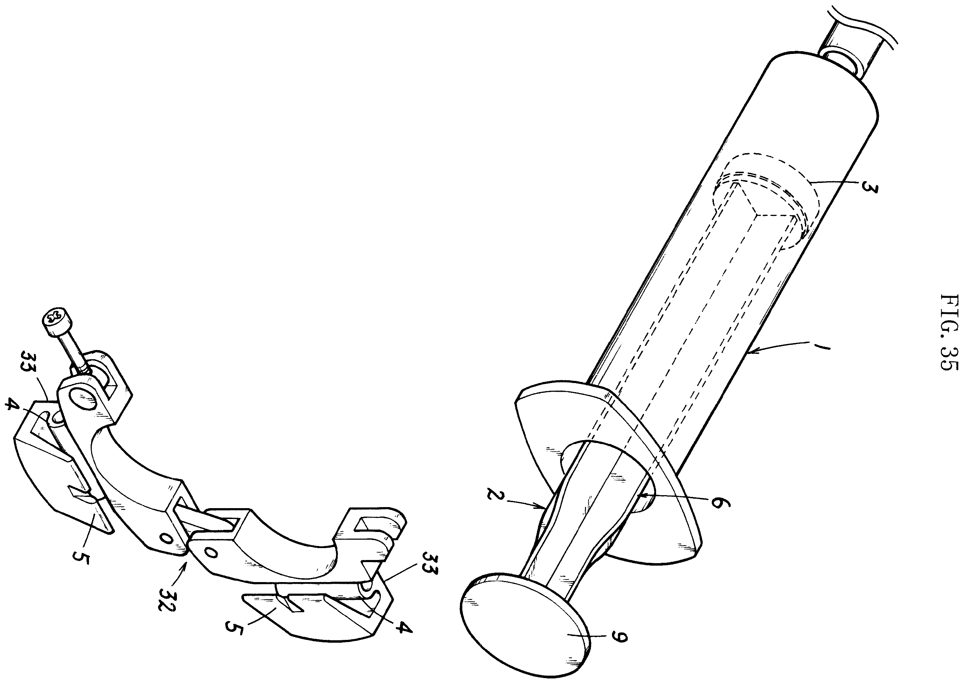

A specific sixteenth example of the present invention shall be described on the basis of FIGS. 34-37.

The present example pertains to a case in which the work apparatus of Example 1 is configured as an injection apparatus, specifically, as a syringe-like injection apparatus as shown in FIG. 34.

The present example comprises a first member 1 configured as a syringe barrel, and a second member 2 configured as a plunger. The first member 1 (syringe barrel) is furnished with mobilization parts 4 and mobilized contact parts 5, and the second member 2 (plunger) is furnished with contact receiving parts 6.

Specifically, the mobilization parts 4 and the mobilized contact parts 5 are furnished to a clamp-like attachment part 32 adapted to be detachably attached to the first member 1 (syringe barrel), and in this way are detachably furnished to the first member 1 (syringe barrel). More specifically, the mobilization parts 4 are furnished to the clamp-like attachment part 32, and these mobilization parts 4 are in turn furnished with finger grip parts 33 that, during push-operation of a manipulation part 9 furnished to the second member 2 (plunger), detain the fingers in lieu of a flange. The finger grip parts 33 are furnished with the mobilized contact parts 5. When operating resistance arises in the work parts 3, the force bearing on the finger grip parts 33 increases, the mobilization parts 4 elastically deform, and the mobilized contact parts 5 are mobilized in a direction moving closer to the contact receiving parts 6.

That is, the present example is configured such that the first member 1 (syringe barrel) can employ an ordinary conventional syringe barrel, and the clamp-like attachment part 32 furnished with the mobilization parts 4, the mobilized contact parts 5, and the finger grip parts 33 can be detachably attached as a separate element to the first member 1 (syringe barrel).

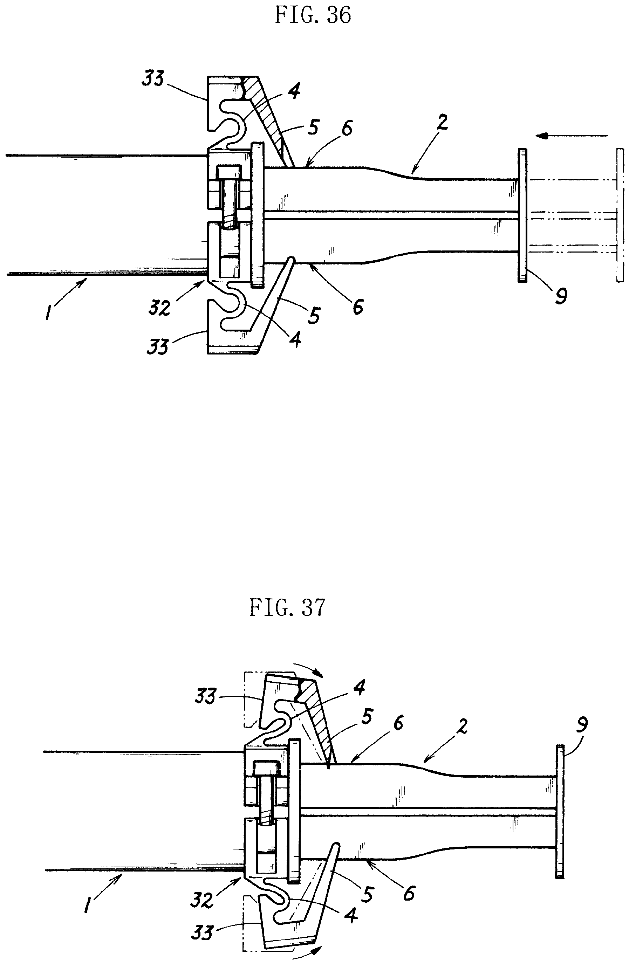

Moreover, in the present example, the second member 2 (plunger) itself functions as the contact receiving parts 6, and as shown in FIG. 37, is configured such that the mobilized contact parts 5 come into contact against side surfaces of the second member 2 (plunger) as the contact receiving parts 6, whereupon at the point in time of contact, the distal ends of the mobilized contact parts 5 bite in to lock with the contact receiving parts 6 of the second member 2 (plunger).

To describe one possible application of the present example, the apparatus could be used, for example, as a pump for inflating the balloon of a balloon catheter.

That is, the present example affords an innovative injection apparatus configured such that, during inflation of the balloon by pushing out the air inside the first member 1 (syringe barrel) with the second member 2 (plunger), once the work part 3 which is adapted to push out the air inside the first member 1 (syringe barrel) in conjunction with the expansion of the balloon, specifically, the distal end part (gasket) of the second member 2 (plunger), reaches a high level of operating resistance, the balloon has been inflated to a prescribed size, and the operating resistance of the work part 3 has reached a prescribed value, the mobilized contact part 5 which has been mobilized by elastic deformation of the mobilization part 4 comes into locked contact against the contact receiving part 6, thereby disabling pushing manipulation of the second member 2 (plunger). In so doing, the feed of air into the balloon terminates, enabling the balloon to dilate the blood vessel at an appropriate dilation pressure, regardless of the condition of inflation of the balloon.

The configuration is otherwise the same as in Example 1.

### Example 17

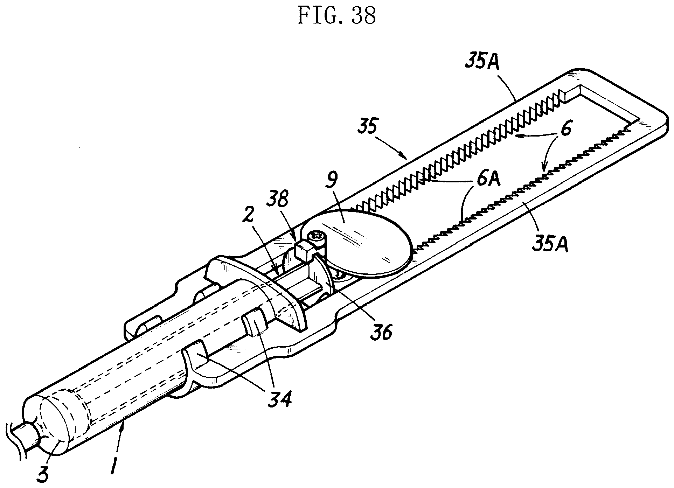

A specific seventeenth example of the present invention shall be described on the basis of FIGS. 38-41.

The present example pertains to a case in which the work apparatus of Example 1 is configured as a suction apparatus, specifically, a syringe-like suction apparatus like that shown in FIG. 38.

The present example comprises a first member 1 configured as a syringe barrel, and a second member 2 configured as a plunger. The first member 1 (syringe barrel) is furnished with a contact receiving part 6, and the second member 2 (plunger) is furnished with a mobilization part 4 and a mobilized contact part 5 which is mobilized through elastic deformation of this mobilization part 4.

Specifically, the first member 1 (syringe barrel) employs the syringe barrel of an existing ordinary syringe, which is furnished with a detachably attached attachment base part 35 of rectangular frame shape furnished with pressure-fit fitted engagement parts 34 adapted to engage the barrel by being fitted thereto in a pressure fit. Contact receiving parts 6 are furnished in opposition to one another on the inside surface of each of left and right vertical frame members 35A of the attachment base part 35, these contact receiving parts 6 having length in the lengthwise direction of the vertical frame members 35A. A plurality of contiguous recesses line up on contact surfaces 6A in the lengthwise direction of the vertical frame members 35A.

The second member 2 (plunger) employs the plunger of an existing ordinary syringe which is furnished, by way of detachably attached parts, with a mobilization part 4 and with mobilized contact parts 5 adapted to be mobilized through elastic deformation of the mobilization part 4, which are situated at a flange 36 at the basal end thereof; and with an manipulation part 9 operated to move the second member 2 (plunger).

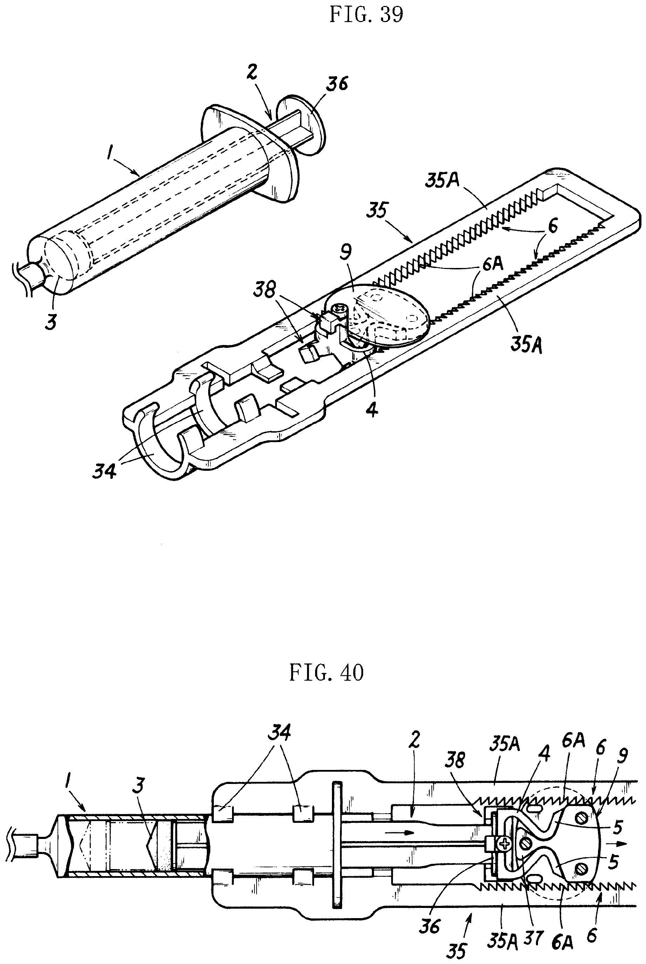

Specifically, as shown in FIG. 40, the mobilization part 4 is formed as a frame-like element of triangular shape in plan view, the bottom side of the frame-shaped triangle being furnished with a locking claw part 38 adapted to detachably interlock with the flange 36 of the second member 2 (plunger). The left and right sloping sides elastically deform, and due to this elastic deformation, the distal end part of each of the sloping sides moves towards the outside (moves in the direction of mutual separation of the distal end parts).

The mobilized contact parts 5 are formed to protruding shape at their distal end parts, these distal end parts projecting outwardly from distal end parts of the left and right sloping sides of the mobilization part 4.

The manipulation part 9 is equipped with a splaying contact part 37 situated within the internal space of the frame-like triangular shape and adapted to move along the left and right sloping sides of the frame-like triangular mobilization part 4 while splaying the left and right sloping sides thereof.

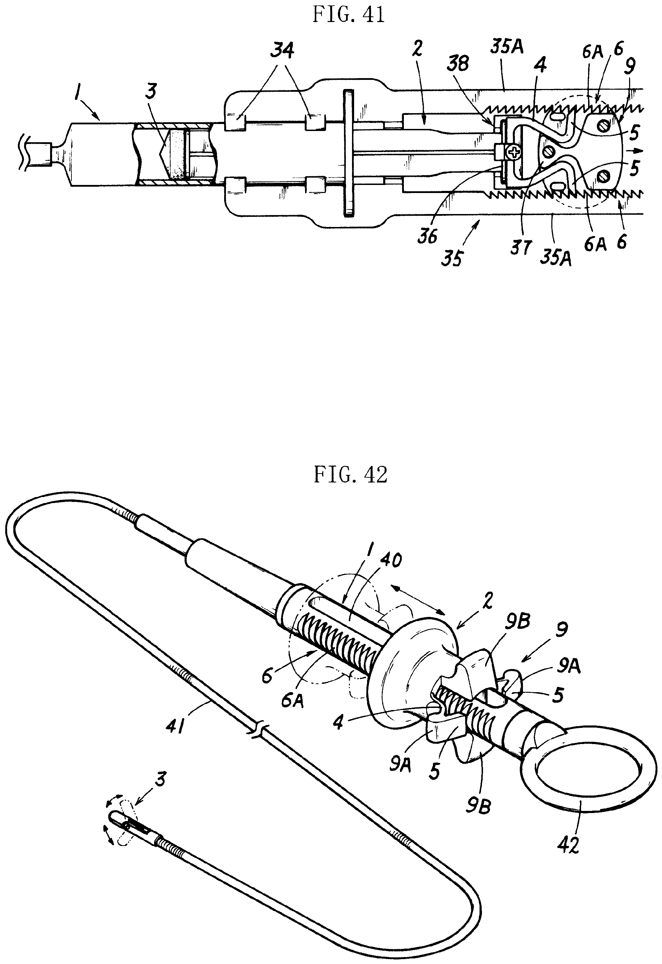

As shown in FIGS. 40 and 41, the present example is configured such that, when the manipulation part 9 is pulled during suctioning work, the first member 1 (syringe barrel) moves in a direction pulling the movable second member 2 (plunger). Once the suction resistance goes above a prescribed value during the suctioning work, the splaying contact part 37 of the manipulation part 9 moves while splaying the mobilization part 4, and due to this splaying action by the splaying contact part 37, the mobilization part 4 elastically deforms, whereupon, as a result of the elastic deformation of the mobilization part 4, the mobilized contact parts 5 come into contact against the contact receiving parts 6. Pulling of the manipulation part 9 is disabled by the mobilized contact parts 5 coming into contact against the contact receiving parts 6, halting the suctioning work. In this state of contact of the mobilized contact parts 5 against the contact receiving parts 6, even when great force is applied to pull the manipulation part 9, the force applied to the manipulation part 9 is not transmitted as force that moves the second member 2 (plunger), so as to maintain a state in which suctioning work is disabled.

Moreover, in the present example, the mobilization part 4 can be swapped out for another mobilization part 4 having a different elastic modulus, so the maximum suction force able to be exerted on an object 7 by the work part 3 is adjustable by swapping the mobilization part 4 for one of the desired elastic modulus.

The configuration is otherwise the same as in Example 1.

### Example 18

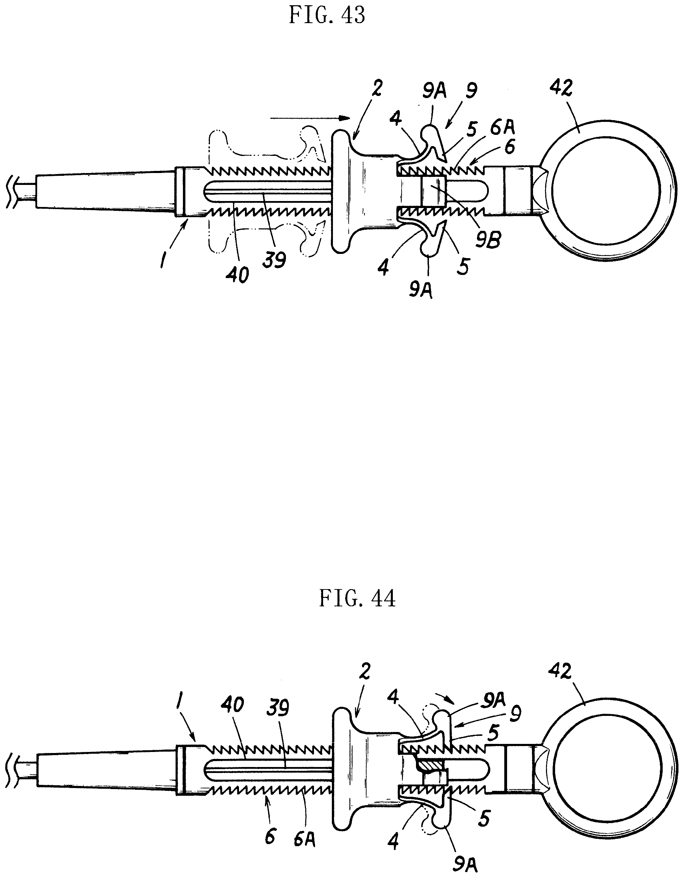

A specific eighteenth example of the present invention shall be described on the basis of FIGS. 42-44.

The present example pertains to a case in which the work apparatus of Example 1 is configured as a biopsy forceps comprising a first member 1 configured as a main unit, a second member 2 configured as a slider part, and a work part 3 that is opened and closed by the action of a wire 39 which is continuous with the second member 2.

Specifically, the first member 1 (main unit) is furnished on the peripheral surface with contact receiving parts 6; additionally furnished with a guide part 40 (specifically, a guide groove) for guiding sliding movement of the second member 2 (slider part); and further furnished at the distal end part with a flexible insertion tube 41, and at the basal end part with a finger grip locking part 42 for manipulating the manipulation part 9.

The second member 2 (slider part) is furnished with mobilization parts 4, mobilized contact parts 5 which are mobilized through elastic deformation of the mobilization parts 4, and the manipulation part 9, and is slidably movable with respect to the first member 1 (main unit).

More specifically, the manipulation part 9 comprises first manipulation parts 9A and second manipulation parts 9B. The first manipulation parts 9A are furnished to the second member 2 (slider part) via the intervening mobilization parts 4, and their distal end parts are continuous with the mobilized contact parts 5. The second manipulation parts 9B, unlike the first manipulation part 9A, are not equipped with the mobilization parts 4 or the mobilized contact parts 5, and are non-deformably secured to the second member 2 (slider part).

That is, the present example is configured such that, when the work part 3 is operated through manipulation of the first manipulation parts 9A and operating resistance arises in the work part 3, the mobilization parts 4, which are continuous with the first manipulation parts 9A, elastically deform. Due to this elastic deformation of the mobilization parts 4, the mobilized contact parts 5, which are continuous with the first manipulation parts 9A, come into contact against the contact receiving parts 6. Once the mobilized contact parts 5 have come into contact against the contact receiving parts 6, even when force is further applied to the first manipulation parts 9A, the additionally applied force is not transmitted to the work part 3. When the work part 3 is operated through manipulation of the second manipulation parts 9B, action bringing the mobilized contact parts 5 into contact against the contact receiving parts 6 does not arise, and therefore the operation and working effects are comparable to those of a conventional, ordinary biopsy forceps. That is, the configuration is such that the work part 3 exerts holding force in response to force applied to the second manipulation parts 9B, and in no instance does force applied to the second manipulation parts 9B cease to be transmitted to the work part 3, nor is the transmission ratio at which force is transmitted to the work part 3 lowered.

The configuration is otherwise the same as in Example 1.

### Example 19

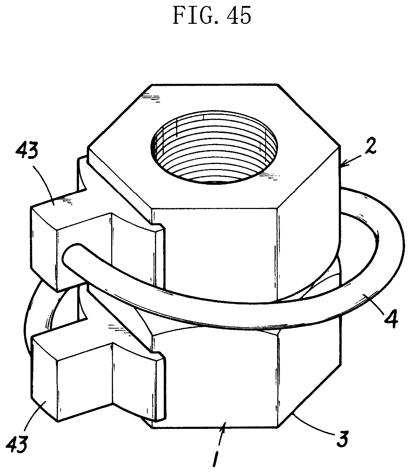

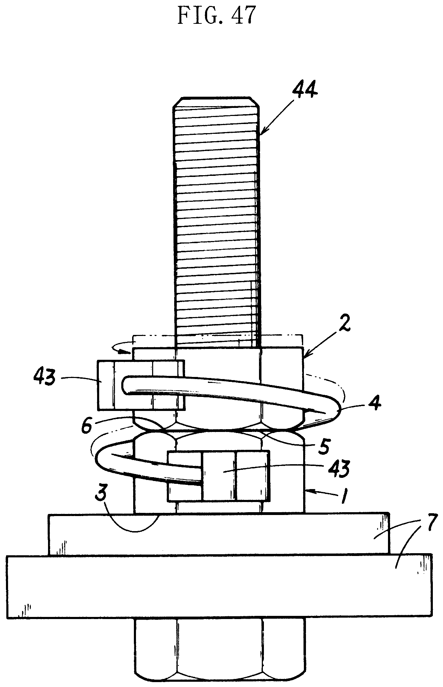

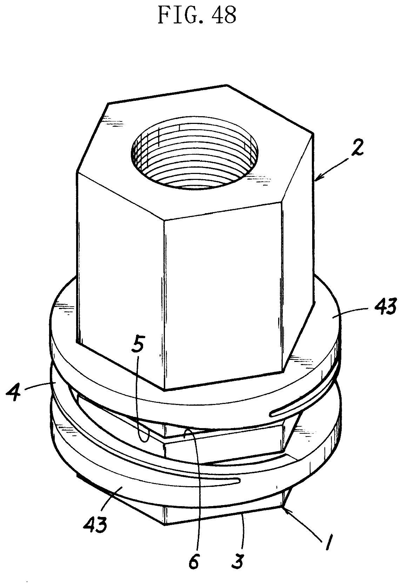

A specific nineteenth example of the present invention shall be described on the basis of FIGS. 45-48.

The present example pertains to a case in which the work apparatus of Example 1 is configured such that the first member 1 and the second member 2 together move in the same direction while maintaining a constant distance therebetween. The configuration is such that the work part 3 is operated by the first member 1 and the second member 1 together moving in the same direction while maintaining a constant distance therebetween, whereby the work part 3 carries out prescribed work on an object 7, specifically, nuts like those shown in FIG. 45, for tightening and fastening the object 7.

Specifically, the present example is configured such that the first member 1 and the second member 2 taking the form of nuts of equal diameter and pitch are lined up at prescribed spacing, and the lined up first member 1 and second member 2 are linked and unified by an elastically deformable mobilization part 4.

More specifically, of the lower surface or the upper surface of the first member 1, and the lower surface or the upper surface of the second member 2, which are lined up facing one another, one is employed as a mobilized contact part 5, while the other is employed as a contact receiving part 6, and a surface that contacts the object 7 and presses the object 7 by means of tightening is employed as the work part 3. In the present example, the member positioned towards the direction of advance in the direction of movement during tightening work, i.e., the one contacting the object 7, is employed as the first member 1, and the upper surface or lower surface of the first member 1, which surface faces the second member 2, is employed as the contact receiving part 6. The lower surface or upper surface constituting the surface opposite from the upper surface or lower surface employed as the contact receiving part 6 is employed as the work part 3.

This configuration is one in which the member positioned to the opposite side from the direction of advance in the direction of movement is the second member 2, and the upper surface or the lower surface of this second member 2, which surface is the one facing the first member 1, is the mobilized contact part 5.

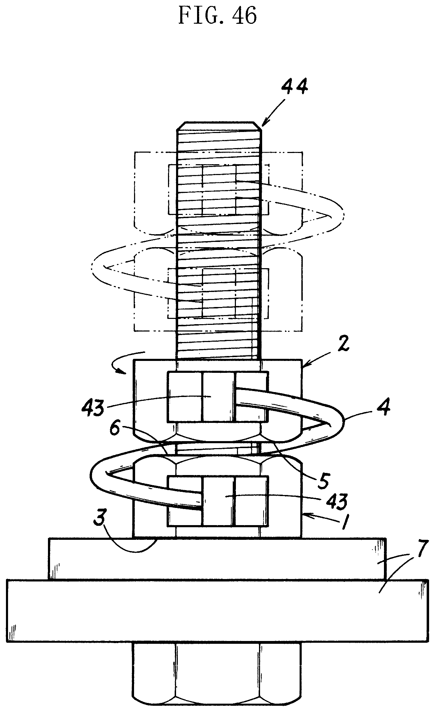

As shown in FIG. 46, the mobilization part 4 linking the first member 1 and the second member 2 is formed to a spiral shape, one end of which is connected to a mobilization part connecting part 43 furnished to the first member 1, and the other end of which is connected to a mobilization part connecting part 43 furnished to the second member 2, so as to bridge the first member 1 and the second member.

To describe in greater detail, as shown in FIG. 46, in the present example, when force is applied to either the first member 1 or the second member 2 which have been movably threaded onto a bolt 44, and specifically to the second member 2, producing spiral motion thereof, the force applied to this second member 2 is transmitted to the first member 1 via the mobilization part 4, and the first member 1 and the second member 2 move in the same direction while maintaining a constant distance, due to the mobilization part 4. The work part 3 (the upper surface or lower surface of the first member 1) is operated due to this movement of the first member 1 and the second member 2, and until operating resistance arises in the operated work part 3, in other words, until the work part 3 comes into contact against the object 7, the contact receiving part 6 furnished to the first member 1 and the mobilized contact part 5 furnished to the second member 2 move in the same direction while maintaining a constant distance in the same way as do the first member 1 and the second member 2, in association with this movement of the first member 1 and the second member 2.

In the present example, when the work part 3 comes into contact against the object 7 and operating resistance arises, the mobilization part 4 linking the first member 1 and the second member 2 elastically deforms, and due to this elastic deformation of the mobilization part 4, the mobilized contact part 5 is mobilized in a direction moving closer towards the contact receiving part 6. Specifically, by the work part 3 of the first member 1 coming into contact with the object 7, movement is halted, or the speed of motion drops below that of the second member 2. Due to a differential arising in the speed of motion of the mobilized contact part 5 and the contact receiving part 6, the mobilization part 4 deforms, the distance between the mobilized contact part 5 and the contact receiving part 6 narrows, and the mobilized contact part 5 moves closer towards the contact receiving part 6.

Additionally, in the present example, as the operating resistance of the work part 3 increases, the amount of deformation of the mobilization part 4 increases as well, thus further narrowing the distance between the mobilized contact part 5 and the contact receiving part 6 and moving them closer to one another. When the operating resistance of the work part 3 reaches a prescribed value, the mobilized contact part 5 comes into contact against the contact receiving part 6. Once the mobilized contact part 5 comes into contact against the contact receiving part 6, even when force is further applied to the second member 2, spiral motion of the second member 2 is not produced, and therefore the force applied to the second member 2 is not transmitted to the first member 1, and specifically to the work part 3.

That is, in the present example, spiral motion of the second member 2 in the tightening direction is disabled through contact of the mobilized contact part 5 of the second member 2 against the contact receiving part 6 of the first member 1, and due to this disabling of spiral motion of the second member 2, force applied to the second member 2 is not transmitted to the first member 1, and the tightening (pressing) work of the work part 3 of the first member 1 on the object 7 halts.

Consequently, the present example affords an unprecedented, exceedingly practical and eminently innovative work apparatus (nut) with which, even when force sufficiently great to cause the work part 3 to exert force in excess of a prescribed value is casually applied to the first member 1 or the second member 2 furnished with the movable contact part 5, force greater than the prescribed value is not applied to the object 7, and therefore tightening work can be carried out safely without encountering problems caused by over-tightening, such as damage to the object 7.

The present example is configured such that it is possible to adjust the diameter of the spiral-shaped mobilization part 4, or connect a mobilization part 4 of a different elastic modulus, and in so doing to produce a configuration by which the maximum tightening force (pressing force) that the work part 3 can exert on the object 7 is freely adjustable.

The present invention set forth hereinabove is an innovative work apparatus able to be variously embodied as shown in the aforedescribed examples, and utilized in a range of applications. The present invention is not limited to Examples 1 to 19, and the specific configurations of the constituent components may be designed as appropriate.

### KEY

- 1: First member
- 2: Second member
- 3: Work part
- 4: Mobilization part
- 5: Mobilized contact part
- 5A: Contact surface
- 6: Contact receiving part
- 6A: Contact surface

## Claims

1. A work apparatus provided with a first member (1) and a second member (2), and additionally provided with a work part (3) to which at least one of the members is movably provided, the first member (1) or the second member (2) moving due to an applied force, and the transmitting of a force causing the work part (3) to operate and carry out prescribed work, wherein the work apparatus is **characterized in that** either the first member (1) or the second member (2) is furnished with a mobilization part (4) and with a mobilized contact part (5) adapted to be mobilized by deformation of the mobilization part (4), while the other member is furnished with a contact receiving part (6) contacted by this mobilized contact part (5), **characterized in** the mobilized contact part (5) being adapted to undergo relative motion with respect to the contact receiving part (6) without moving closer to the contact receiving part (6), or to move in the same direction as the contact receiving part (6) while maintaining a constant distance therefrom, until operating resistance arises in the work part (3); when operating resistance arises in the work part (3), in the case of moving relatively with respect to the contact receiving part (6), to be mobilized in a direction different from the direction of relative motion and move closer to the contact receiving part (6) due to deformation of the mobilization part (4), or in the case of moving in the same direction as the contact receiving part (6) while maintaining equal distance therefrom, to narrow the distance from the contact receiving part (6) and move closer to the contact receiving part (6) due to deformation of the mobilization part (4); and when the operating resistance of the work part (3) reaches a prescribed value, to come into contact against the contact receiving part (6); and in this state of contact of the mobilized contact part (5) against the contact receiving part (6), force further applied to the moveable first member (1) or the second member (2) after the mobilized contact part (5) has come into contact against the contact receiving part (6) is not transmitted to the work part (3), or when force is further applied to the moveable first member (1) or the second member (2) after the mobilized contact part (5) has come into contact against the contact receiving part (6), the transmission ratio at which the applied force is transmitted to the work part (3) is lower than the transmission ratio before the mobilized contact part (5) has come into contact against the contact receiving part (6) .

2. The work apparatus according to claim 1, **characterized in that** the mobilization part (4) comprises an elastic body; when the operating resistance of the work part (3) reaches a prescribed value, the mobilization part (4) elastically deforms by a prescribed amount and the mobilized contact part (5) comes into contact against the contact receiving part (6); and in this state of contact of the mobilized contact part (5) against the contact receiving part (6), when the operating resistance of the work part (3) is lower than the prescribed value, the mobilized contact part (5) retreats from the contact receiving part (6) due to elastic recovery of the mobilization part (4).

3. The work apparatus according to any of claim 1 or 2, **characterized in that** a contact surface (6A) of the contact receiving part (6) contacted by the mobilized contact part (5), or a contact surface (5A) of the mobilized contact part (5) contacting the contact receiving part (6), extends in the direction of motion of the moveable first member (1) or the second member (2); until operating resistance arises in the work part (3), the mobilized contact part (5) undergoes relative motion along the contact surface (6A) of the contact receiving part (6), or the contact receiving part (6) undergoes relative motion along the contact surface (5A) of the mobilized contact part (5); and when operating resistance arises in the work part (3), the mobilized contact part (5) halts relative motion, and, becoming mobilized in a direction different from the relative motion direction, moves closer towards the contact receiving part (6), or the mobilized contact part (5), while undergoing the relative motion, becomes mobilized in a direction different from this relative motion direction and moves closer towards the contact receiving part (6).

4. The work apparatus according to any of claims 1 to 3, **characterized in that** a plurality of recesses or protrusions are arrayed in the lengthwise direction of the contact surface (6A) on the contact surface (6A) of the contact receiving part (6), and the mobilized contact part (5) is furnished with protrusions or recesses adapted to mate with the recesses or protrusions that are furnished to the contact surface (6A) of the contact receiving part (6); or a plurality of recesses or protrusions are arrayed on the contact surface (5A) of the mobilized contact part (5) in the lengthwise direction of the contact surface (5A), and the contact receiving part (6) is furnished with protrusions or recesses adapted to mate with the recesses or protrusions that are furnished to the contact surface (5A) of the mobilized contact part (5); and when the mobilized contact part (5) comes into contact against the contact receiving part (6), the recesses or protrusions of the mobilized contact part (5) mate with those of the contact receiving part (6) to bring about a locked state with respect to the contact receiving part (6).

5. The work apparatus according to any of claims 1 to 4, **characterized in that** the contact surface (6A) of the contact receiving part (6) is furnished with an elastic synthetic resin or rubber, so that the mobilized contact part (5) comes into contact against the elastic synthetic resin or rubber, or the contact surface (5A) of the mobilized contact part (5) is furnished with an elastic synthetic resin or rubber, so that the contact receiving part (6) comes into contact against the elastic synthetic resin or rubber; and when the mobilized contact part (5) comes into contact against the contact receiving part (6), friction is generated between the mobilized contact part (5) and the contact receiving part (6), and the transmission ratio at which force further applied after the mobilized contact part (5) has come into contact against the contact receiving part (6) is transmitted to the work part (3) is lower than the transmission ratio before the mobilized contact part (5) came into contact against the contact receiving part (6).

6. The work apparatus according to any of claims 1 to 5, **characterized in that** while the mobilized contact part (5) is moving closer and coming into contact against the contact receiving part (6) due to deformation of the mobilization part (4), in the event that the contact position of the mobilized contact part (5) against the contact surface (6A) of the contact receiving part (6) changes, or the contact position of the contact surface (5A) of the mobilized contact part (5) against the contact receiving part (6) changes, the amount of deformation of the mobilization part (4) until the mobilized contact part (5) comes into contact against the contact receiving part (6) remains unchanged.

7. The work apparatus according to any of claims 1 to 6, **characterized in that** when operating resistance arises in the work part (3), the mobilized contact part (5), due to deformation of the mobilization part (4), moves closer towards the contact receiving part (6), which is positioned in a substantially orthogonal direction with respect to the relative motion direction.

8. The work apparatus according to any of claims 1 to 7, **characterized by** comprising a lock mechanism for maintaining the mobilized contact part (5) in a state of contact against the contact receiving part (6), the lock mechanism being adapted to maintain contact of the mobilized contact part (5) against the contact receiving part (6) and maintain a constant state of force exerted by the work part (3), even when force no longer continues to be applied after the mobilized contact part (5) has come into contact against the contact receiving part (6).

9. The work apparatus according to any of claims 1 to 8, **characterized by** comprising a mobilization part deformation-inhibiting mechanism for inhibiting deformation of the mobilization part (4), operation of the mobilization part deformation-inhibiting mechanism preventing the mobilization part (4) from deforming, even when operating resistance arises in the work part (3) .

## Patentansprüche

1. Arbeitsvorrichtung, die mit einem ersten Element (1) und einem zweiten Element (2) bereitgestellt ist, und die zusätzlich mit einem Arbeitsteil (3) bereitgestellt ist, an dem mindestens eines der Elemente beweglich bereitgestellt ist, wobei sich das erste Element (1) oder das zweite Element (2) aufgrund einer aufgebrachten Kraft bewegt, und die Übertragung einer Kraft das Arbeitsteil (3) veranlasst, eine vorgeschriebene Arbeit zu verrichten und durchzuführen, wobei die Arbeitsvorrichtung **dadurch gekennzeichnet ist, dass** entweder das erste Element (1) oder das zweite Element (2) mit einem Mobilisierungsteil (4) und mit einem mobilisierten Kontaktteil (5), das angepasst ist, durch Verformung des Mobilisierungsteils (4) mobilisiert zu werden, ausgestattet ist, während das andere Element mit einem Kontaktaufnahmeteil (6), das durch dieses mobilisierte Kontaktteil (5) kontaktiert ist, ausgestattet ist, **dadurch gekennzeichnet, dass** das mobilisierte Kontaktteil (5) angepasst ist, eine relative Bewegung in Bezug auf das Kontaktaufnahmeteil (6) zu erfahren, ohne sich näher zum Kontaktaufnahmeteil (6) zu bewegen, oder sich in derselben Richtung wie das Kontaktaufnahmeteil (6) zu bewegen, während es einen konstanten Abstand zu diesem aufrechterhält, bis ein Betriebswiderstand im Arbeitsteil (3) entsteht; wenn ein Betriebswiderstand im Arbeitsteil (3) entsteht, im Falle einer relativen Bewegung in Bezug auf das Kontaktaufnahmeteil (6), um in einer von der Richtung der relativen Bewegung verschiedenen Richtung mobilisiert zu werden und sich aufgrund einer Verformung des Mobilisierungsteils (4) näher zum Kontaktaufnahmeteil (6) zu bewegen, oder im Falle einer Bewegung in derselben Richtung wie das Kontaktaufnahmeteil (6), während ein gleicher Abstand zu diesem aufrechterhalten wird, um den Abstand zum Kontaktaufnahmeteil (6) zu verringern und sich aufgrund einer Verformung des Mobilisierungsteils (4) näher zum Kontaktaufnahmeteil (6) zu bewegen; und wenn der Betriebswiderstand des Arbeitsteils (3) einen vorgeschriebenen Wert erreicht, um mit dem Kontaktaufnahmeteil (6) in Kontakt zu gelangen; und in diesem Kontaktzustand des mobilisierten Kontaktteils (5) mit dem Kontaktaufnahmeteil (6), eine Kraft, die weiter auf das bewegliche erste Element (1) oder das zweite Element (2) aufgebracht wird, nachdem das mobilisierte Kontaktteil (5) mit dem Kontaktaufnahmeteil (6) in Kontakt gelangt ist, nicht zum Arbeitsteil (3) übertragen wird, oder wenn eine Kraft weiter auf das bewegliche erste Element (1) oder das zweite Element (2) aufgebracht wird, nachdem das mobilisierte Kontaktteil (5) mit dem Kontaktaufnahmeteil (6) in Kontakt gelangt ist, das Übertragungsverhältnis, bei dem die aufgebrachte Kraft an das Arbeitsteil (3) übertragen wird, niedriger ist als das Übertragungsverhältnis, bevor das mobilisierte Kontaktteil (5) mit dem Kontaktaufnahmeteil (6) in Kontakt gelangt ist.

2. Arbeitsvorrichtung nach Anspruch 1, **dadurch gekennzeichnet, dass** das Mobilisierungsteil (4) einen elastischen Körper umfasst; wenn der Betriebswiderstand des Arbeitsteils (3) einen vorgeschriebenen Wert erreicht, sich das Mobilisierungsteil (4) elastisch in einem vorgeschriebenen Ausmaß verformt und das mobilisierte Kontaktteil (5) mit dem Kontaktaufnahmeteil (6) in Kontakt gelangt; und wenn in diesem Kontaktzustand des mobilisierten Kontaktteils (5) mit dem Kontaktaufnahmeteil (6) der Betriebswiderstand des Arbeitsteils (3) niedriger ist als der vorgeschriebene Wert, das mobilisierte Kontaktteil (5) sich vom Kontaktaufnahmeteil (6) aufgrund einer elastischen Erholung des Mobilisierungsteils (4) zurückzieht.

3. Arbeitsvorrichtung nach einem der Ansprüche 1 oder 2, **dadurch gekennzeichnet, dass** eine Kontaktfläche (6A) des Kontaktaufnahmeteils (6), die vom mobilisierten Kontaktteil (5) kontaktiert wird, oder eine Kontaktfläche (5A) des mobilisierten Kontaktteils (5), die das Kontaktaufnahmeteil (6) kontaktiert, sich in der Bewegungsrichtung des beweglichen ersten Elements (1) oder des zweiten Elements (2) erstreckt; bis ein Betriebswiderstand im Arbeitsteil (3) entsteht, das mobilisierte Kontaktteil (5) eine relative Bewegung entlang der Kontaktfläche (6A) des Kontaktaufnahmeteils (6) erfährt oder das Kontaktaufnahmeteil (6) eine relative Bewegung entlang der Kontaktfläche (5A) des mobilisierten Kontaktteils (5) erfährt; und wenn ein Betriebswiderstand im Arbeitsteil (3) entsteht, das mobilisierte Kontaktteil (5) eine relative Bewegung stoppt und sich, in einer von der relativen Bewegungsrichtung verschiedenen Richtung mobilisiert werdend, näher in Richtung des Kontaktaufnahmeteils (6) bewegt, oder das mobilisierte Kontaktteil (5), während es die relative Bewegung erfährt, in einer von dieser relativen Bewegungsrichtung verschiedenen Richtung mobilisiert wird und sich näher in Richtung des Kontaktaufnahmeteils (6) bewegt.

4. Arbeitsvorrichtung nach einem der Ansprüche 1 bis 3, **dadurch gekennzeichnet, dass** eine Vielzahl von Vertiefungen oder Vorsprüngen in der Längsrichtung der Kontaktfläche (6A) auf der Kontaktfläche (6A) des Kontaktaufnahmeteils (6) angeordnet sind und das mobilisierte Kontaktteil (5) mit Vorsprüngen oder Vertiefungen ausgestattet ist, die angepasst sind, mit den Vertiefungen oder Vorsprüngen ineinanderzugreifen, mit welchen die Kontaktfläche (6A) des Kontaktaufnahmeteils (6) ausgestattet ist; oder eine Vielzahl von Vertiefungen oder Vorsprüngen auf der Kontaktfläche (5A) des mobilisierten Kontaktteils (5) in der Längsrichtung der Kontaktfläche (5A) angeordnet sind und das Kontaktaufnahmeteil (6) mit Vorsprüngen oder Vertiefungen ausgestattet ist, die angepasst sind, mit den Vertiefungen oder Vorsprüngen ineinanderzugreifen, mit denen die Kontaktfläche (5A) des mobilisierten Kontaktteils (5) ausgestattet ist; und wenn das mobilisierte Kontaktteil (5) mit dem Kontaktaufnahmeteil (6) in Kontakt gelangt, die Vertiefungen oder Vorsprünge des mobilisierten Kontaktteils (5) mit denen des Kontaktaufnahmeteils (6) ineinandergreifen, um einen verriegelten Zustand in Bezug auf das Kontaktaufnahmeteil (6) herbeizuführen.

5. Arbeitsvorrichtung nach einem der Ansprüche 1 bis 4, **dadurch gekennzeichnet, dass** die Kontaktfläche (6A) des Kontaktaufnahmeteils (6) mit einem elastischen, synthetischen Harz oder Gummi ausgestattet ist, sodass das mobilisierte Kontaktteil (5) mit dem elastischen synthetischen Harz oder Gummi in Kontakt gelangt, oder die Kontaktfläche (5A) des mobilisierten Kontaktteils (5) mit einem elastischen synthetischen Harz oder Gummi ausgestattet ist, sodass das Kontaktaufnahmeteil (6) mit dem elastischen synthetischen Harz oder Gummi in Kontakt gelangt; und wenn das mobilisierte Kontaktteil (5) mit dem Kontaktaufnahmeteil (6) in Kontakt gelangt, Reibung zwischen dem mobilisierten Kontaktteil (5) und dem Kontaktaufnahmeteil (6) erzeugt wird und das Übertragungsverhältnis, bei welchem eine Kraft, die weiter aufgebracht wird, nachdem das mobilisierte Kontaktteil (5) mit dem Kontaktaufnahmeteil (6) in Kontakt gelangt ist, an das Arbeitsteil (3) übertragen wird, kleiner ist als das Übertragungsverhältnis bevor das mobilisierte Kontaktteil (5) mit dem Kontaktaufnahmeteil (6) in Kontakt gelangt ist.

6. Arbeitsvorrichtung nach einem der Ansprüche 1 bis 5, **dadurch gekennzeichnet, dass**, während sich das mobilisierte Kontaktteil (5) näher bewegt und mit dem Kontaktaufnahmeteil (6) aufgrund einer Verformung des Mobilisierungsteils (4) in Kontakt gelangt, falls sich die Kontaktposition des mobilisierten Kontaktteils (5) mit der Kontaktfläche (6A) des Kontaktaufnahmeteils (6) ändert oder sich die Kontaktposition der Kontaktfläche (5A) des mobilisierten Kontaktteils (5) mit dem Kontaktaufnahmeteil (6) ändert, das Ausmaß einer Verformung des Mobilisierungsteils (4), bis das mobilisierte Kontaktteil (5) mit dem Kontaktaufnahmeteil (6) in Kontakt gelangt, unverändert bleibt.

7. Arbeitsvorrichtung nach einem der Ansprüche 1 bis 6, **dadurch gekennzeichnet, dass**, wenn ein Betriebswiderstand im Arbeitsteil (3) entsteht, das mobilisierte Kontaktteil (5) sich, aufgrund einer Verformung des Mobilisierungsteils (4) näher in Richtung des Kontaktaufnahmeteils (6) bewegt, welches in einer im Wesentlichen rechtwinkligen Richtung in Bezug auf die relative Bewegungsrichtung positioniert ist.

8. Arbeitsvorrichtung nach einem der Ansprüche 1 bis 7, **gekennzeichnet dadurch, dass** sie einen Verriegelungsmechanismus zum Aufrechterhalten des mobilisierten Kontaktteils (5) in einem Kontaktzustand mit dem Kontaktaufnahmeteil (6) umfasst, wobei der Verriegelungsmechanismus angepasst ist, einen Kontakt des mobilisierten Kontaktteils (5) mit dem Kontaktaufnahmeteil (6) aufrechtzuerhalten und einen konstanten Zustand einer durch das Arbeitsteil (3) ausgeübten Kraft aufrechtzuerhalten, selbst wenn keine Kraft mehr aufgebracht wird, nachdem das mobilisierte Kontaktteil (5) mit dem Kontaktaufnahmeteil (6) in Kontakt gelangt ist.

9. Arbeitsvorrichtung nach einem der Ansprüche 1 bis 8, **dadurch gekennzeichnet, dass** sie einen Mobilisierungsteil-Verformungsverhinderungsmechanismus zum Verhindern einer Verformung des Mobilisierungsteils (4) umfasst, wobei ein Betrieb des Mobilisierungsteil-Verformungsverhinderungsmechanismus eine Verformung des Mobilisierungsteils (4) verhindert, selbst wenn ein Betriebswiderstand im Arbeitsteil (3) entsteht.

## Revendications

1. Appareil de travail doté d'un premier élément (1) et d'un second élément (2), et doté en outre d'une partie de travail (3) sur laquelle au moins un des éléments est prévu de manière mobile, le premier élément (1) ou le second élément (2) se déplaçant en raison d'une force appliquée, et la transmission d'une force amenant la partie de travail (3) à fonctionner et réaliser le travail prescrit, dans lequel l'appareil de travail est **caractérisé en ce que** le premier élément (1) ou le second élément (2) est pourvu d'une partie de mobilisation (4) et d'une partie de contact mobilisée (5) adaptée pour être mobilisée par déformation de la partie de mobilisation (4) alors que l'autre élément est pourvu d'une partie de réception de contact (6) avec laquelle entre en contact cette partie de contact mobilisée (5), **caractérisé en ce que** la partie de contact mobilisée (5) est adaptée pour subir un mouvement relatif par rapport à la partie de réception de contact (6) sans se déplacer plus près de la partie de réception de contact (6), ou pour se déplacer dans la même direction que la partie de réception de contact (6) tout en maintenant une distance constante depuis celle-ci, jusqu'à ce qu'une résistance opérationnelle se produise dans la partie de travail (3) ; lorsqu'une résistance opérationnelle se produit dans la partie de travail (3), dans le cas d'un déplacement relativement par rapport à la partie de réception de contact (6), pour être mobilisée dans une direction différente de la direction de mouvement relatif et se déplacer plus près de la partie de réception de contact (6) en raison de la déformation de la partie de mobilisation (4), ou dans le cas d'un déplacement dans la même direction que la partie de réception de contact (6) tout en maintenant une distance égale depuis celle-ci, pour restreindre la distance depuis la partie de réception de contact (6) et se déplacer plus près de la partie de réception de contact (6) en raison de la déformation de la partie de mobilisation (4) ; et lorsqu'une résistance opérationnelle de la partie de travail (3) atteint une valeur prescrite, pour venir en contact contre la partie de réception de contact (6) ; et dans cet état de contact de la partie de contact mobilisée (5) contre la partie de réception de contact (6), la force appliquée en outre au premier élément mobile (1) ou au second élément (2) après que la partie de contact mobilisée (5) est venue en contact contre la partie de réception de contact (6) n'est pas transmise à la partie de travail (3), ou lorsque la force est en outre appliquée au premier élément mobile (1) ou au second élément (2) après que la partie de contact mobilisée (5) est venue en contact contre la partie de réception de contact (6), le rapport de transmission auquel la force appliquée est transmise à la partie de travail (3) est plus faible que le rapport de transmission avant que la partie de contact mobilisée (5) ne soit venue en contact contre la partie de réception de contact (6).

2. Appareil de travail selon la revendication 1, **caractérisé en ce que** la partie de mobilisation (4) comprend un corps élastique ; lorsque la résistance opérationnelle de la partie de travail (3) atteint une valeur prescrite, la partie de mobilisation (4) se déforme élastiquement d'une quantité prescrite et la partie de contact mobilisée (5) vient en contact contre la partie de réception de contact (6) ; et dans cet état de contact de la partie de contact mobilisée (5) contre la partie de réception de contact (6), lorsque la résistance opérationnelle de la partie de travail (3) est inférieure à la valeur prescrite, la partie de contact mobilisée (5) recule de la partie de réception de contact (6) en raison de la récupération élastique de la partie de mobilisation (4).

3. Appareil de travail selon l'une quelconque des revendications 1 ou 2, **caractérisé en ce qu'**une surface de contact (6A) de la partie de réception de contact (6) avec laquelle entre en contact la partie de contact mobilisée (5), ou une surface de contact (5A) de la partie de contact mobilisée (5) entrant en contact avec la partie de réception de contact (6), s'étend dans la direction de mouvement du premier élément mobile (1) ou du second élément (2) ; jusqu'à ce qu'une résistance opérationnelle se produise dans la partie de travail (3), la partie de contact mobilisée (5) subit un mouvement relatif le long de la surface de contact (6A) de la partie de réception de contact (6), ou la partie de réception de contact (6) subit un mouvement relatif le long de la surface de contact (5A) de la partie de contact mobilisée (5) ; et lorsqu'une résistance opérationnelle se produit dans la partie de travail (3), la partie de contact mobilisée (5) cesse un mouvement relatif, et devenant mobilisée dans une direction différente de la direction de mouvement relatif, se déplace plus près vers la partie de réception de contact (6), ou la partie de contact mobilisée (5) tout en subissant le mouvement relatif, devient mobilisée dans une direction différente de cette direction de mouvement relatif et se déplace plus près vers la partie de réception de contact (6).

4. Appareil de travail selon l'une quelconque des revendications 1 à 3, **caractérisé en ce qu'**une pluralité d'évidements ou de saillies sont agencés dans la direction de longueur de la surface de contact (6A) sur la surface de contact (6A) de la partie de réception de contact (6), et la partie de contact mobilisée (5) est pourvue de saillies ou d'évidements adaptés pour s'accoupler avec les évidements ou saillies qui sont prévus sur la surface de contact (6A) de la partie de réception de contact (6) ; ou une pluralité d'évidements ou de saillies sont agencés sur la surface de contact (5A) de la partie de contact mobilisée (5) dans la direction de longueur de la surface de contact (5A), et la partie de réception de contact (6) est pourvue de saillies ou d'évidements adaptés pour s'accoupler avec les évidements ou saillies qui sont prévus sur la surface de contact (5A) de la partie de contact mobilisée (5) ; et lorsque la partie de contact mobilisée (5) vient en contact contre la partie de réception de contact (6), les évidements ou saillies de la partie de contact mobilisée (5) s'accouplent avec ceux/celles de la partie de réception de contact (6) pour susciter un état verrouillé par rapport à la partie de réception de contact (6).

5. Appareil de travail selon l'une quelconque des revendications 1 à 4, **caractérisé en ce que** la surface de contact (6A) de la partie de réception de contact (6) est pourvue d'une résine ou caoutchouc synthétique élastique de sorte que la partie de contact mobilisée (5) vienne en contact contre la résine ou le caoutchouc synthétique élastique, ou la surface de contact (5A) de la partie de contact mobilisée (5) est pourvue d'une résine ou d'un caoutchouc synthétique élastique de sorte que la partie de réception de contact (6) vienne en contact contre la résine ou le caoutchouc synthétique élastique ; et lorsque la partie de contact mobilisée (5) vient en contact contre la partie de réception de contact (6), une friction est générée entre la partie de contact mobilisée (5) et la partie de réception de contact (6), et le rapport de transmission auquel la force appliquée en outre après que la partie de contact mobilisé (5) est venue en contact contre la partie de réception de contact (6) est transmise à la partie de travail (3) est inférieur au rapport de transmission avant que la partie de contact mobilisée (5) ne soit venue en contact contre la partie de réception de contact (6).

6. Appareil de travail selon l'une quelconque des revendications 1 à 5, **caractérisé en ce qu'**alors que la partie de contact (5) mobilisée se déplace plus près et vient en contact contre la partie de réception de contact (6) en raison de la déformation de la partie de mobilisation (4), au cas où la position de contact de la partie de contact mobilisée (5) contre la surface de contact (6A) de la partie de réception de contact (6) change, ou la position de contact de la surface de contact (5A) de la partie de contact mobilisée (5) contre la partie de réception de contact (6) change, la quantité de déformation de la partie de mobilisation (4) jusqu'à ce que la partie de contact mobilisée (5) vienne en contact contre la partie de réception de contact (6) reste inchangée.

7. Appareil de travail selon l'une quelconque des revendications 1 à 6, **caractérisé en ce que** lorsqu'une résistance opérationnelle se produit dans la partie de travail (3), la partie de contact mobilisée (5), en raison de la déformation de la partie de mobilisation (4), se déplace plus près vers la partie de réception de contact (6) qui est positionnée dans une direction sensiblement orthogonale par rapport à la direction de mouvement relatif.

8. Appareil de travail selon l'une quelconque des revendications 1 à 7, **caractérisé en ce qu'**il comprend un mécanisme de verrouillage pour le maintien de la partie de contact mobilisée (5) dans un état de contact contre la partie de réception de contact (6), le mécanisme de verrouillage étant adapté pour maintenir le contact de la partie de contact mobilisée (5) contre la partie de réception de contact (6) et maintenir un état constant de force exercée par la partie de travail (3), même lorsque la force ne continue plus à être appliquée après que la partie de contact mobilisée (5) est venue en contact contre la partie de réception de contact (6).

9. Appareil de travail selon l'une quelconque des revendications 1 à 8, **caractérisé en ce qu'**il comprend un mécanisme d'empêchement de déformation de partie de mobilisation pour empêcher la déformation de la partie de mobilisation (4), le fonctionnement du mécanisme d'empêchement de déformation de partie de mobilisation empêchant la partie de mobilisation (4) de se déformer, même lorsqu'une résistance opérationnelle se produit dans la partie de travail (3).
